# EUROPEAN PATENT APPLICATION

(11) **EP 4 633 165 A1**
(43) Date of publication of application: **15.10.2025**
(21) Application number: 23901058.0
(22) Date of filing: 05.12.2023
(51) Int. Cl.: H04N 19/597, H04N 19/70, H04N 19/184, H04N 19/85

(54) **3D DATA TRANSMISSION APPARATUS, 3D DATA TRANSMISSION METHOD, 3D DATA RECEPTION APPARATUS, AND 3D DATA RECEPTION METHOD**

(30) Priority: 05.12.2022 KR 20220167548
(71) Applicant: LG Electronics Inc., Yeongdeungpo-gu Seoul 07336 (KR)
(72) Inventor: YOON, Yeojin, Seoul 06772 (KR)
(74) Representative: Frenkel, Matthias Alexander
(86) International application number: PCT/KR2023/019880
(87) International publication number: WO 2024/123039

(57) **Abstract**

A 3D data transmission method, a 3D data transmission apparatus, a 3D data reception method, and a 3D data reception apparatus are disclosed. The 3D data reception method may comprise the steps of: determining a target sub-group on the basis of a target region selected by a user and signaling information; and extracting the bitstream of the target sub-group from a bitstream and performing decoding on the basis of the extracted bitstream of the target sub-group to reconstruct mesh data of the target sub-group.

## Description

### [Technical Field]

Embodiments provide a method for providing 3D content to provide a user with various services such as virtual reality (VR), augmented reality (AR), mixed reality (MR), and self-driving services.

### [Background Art]

Point cloud data or mesh data in 3D content is a set of points in 3D space. However, it is difficult to create point cloud data or mesh data due to the large amount of points in 3D space.

In other words, a large throughput is required to transmit and receive 3D data with a considerable number of points, such as a point cloud or mesh data.

### [Disclosure]

### [Technical Problem]

An object of the present disclosure is to provide an apparatus and method for efficiently transmitting and receiving mesh data to resolve the aforementioned issue.

Another object of the present disclosure is to provide an apparatus and method to address the latency and encoding/decoding complexity of mesh data.

An object of the present disclosure is to provide an apparatus and method for compressing and reconstructing mesh data for partial access.

Another object is to provide an apparatus and method for compressing and reconstructing mesh data for partial access by dividing the mesh data into subgroups for compression and reconstruction to enable partial access while increasing the compression efficiency of the mesh data.

Objects of the present disclosure are not limited to the aforementioned objects, and other objects of the present disclosure which are not mentioned above will become apparent to those having ordinary skill in the art upon examination of the following description.

### [Technical Solution]

The object of the present disclosure can be achieved by providing a method of transmitting 3D data, including pre-processing input mesh data and outputting base mesh data, encoding the base mesh data, and transmitting a bitstream containing the encoded mesh data and signaling information.

According to embodiments, the method may further include dividing the input mesh data into one or more sub-groups.

According to embodiments, the pre-processing may include decimating the input mesh data of the sub-groups and generating decimated mesh data, generating texture coordinates for each vertex of the decimated mesh data based on the sub-groups and outputting base mesh data having the texture coordinates, and subdividing the base mesh data having the texture coordinates based on the sub-groups, and generating fitted subdivided mesh data by performing fitting such that the subdivided base mesh data becomes similar to the input mesh data.

According to embodiments, based on that vertices constituting a polygon among polygons configured by connecting the vertices of the decimated mesh data are included in two or more sub-groups among the sub-groups in the generation of the texture coordinates, connectivity information related to the vertices constituting the polygon may be redundantly included in the two or more sub-groups.

According to embodiments, the encoding may include encoding the base mesh data of each of the sub-groups and generating a bitstream for each of the sub-groups, and inserting sub-group identification information before each of the bitstreams to identify a corresponding one of the sub-groups.

According to embodiments, the encoding may further include reconstructing the encoded base mesh data, generating displacement information based on the fitted subdivided mesh data and the reconstructed base mesh data, encoding the displacement information and generating a displacement information bitstream, reconstructing the encoded displacement information, reconstructing mesh data based on the reconstructed base mesh data and the reconstructed displacement information, regenerating a texture map based on a texture map of the original mesh data and the reconstructed mesh data, and encoding the regenerated texture map and generating a texture map bitstream.

According to embodiments, the signaling information may include sub-group-related signaling information, wherein the sub-group-related signaling information may include at least one of information for identifying the number of the one or more sub-groups, information for identifying a method of dividing the sub-groups, or information for identifying a coding type for the base mesh data.

According to embodiments, an apparatus for transmitting 3D data may include a pre-processor configured to pre-process input mesh data and outputting base mesh data, an encoder configured to encode the base mesh data, and a transmitter configured to transmit a bitstream containing the encoded mesh data and signaling information.

According to embodiments, the apparatus may further include a sub-group divider configured to divide the input mesh data into one or more sub-groups.

According to embodiments, the pre-processor may include a mesh decimator configured to decimate the input mesh data of the sub-groups and generate decimated mesh data, a parameterization part configured to generate texture coordinates for each vertex of the decimated mesh data based on the sub-groups and output base mesh data having the texture coordinates, and a fitting subdivider configured to subdivide the base mesh data having the texture coordinates based on the sub-groups, and generating fitted subdivided mesh data by performing fitting such that the subdivided base mesh data becomes similar to the input mesh data.

According to embodiments, based on that vertices constituting a polygon among polygons configured by connecting the vertices of the decimated mesh data are included in two or more sub-groups among the sub-groups in the parameterization part, connectivity information related to the vertices constituting the polygon may be redundantly included in the two or more sub-groups.

According to embodiments, the encoder may include a base mesh encoder configured to encode the base mesh data of each of the sub-groups and generate a bitstream for each of the sub-groups, and insert sub-group identification information before each of the bitstreams to identify a corresponding one of the sub-groups, a base mesh reconstructor configured to reconstruct the encoded base mesh data, a displacement information generator configured to generate displacement information based on the fitted subdivided mesh data and the reconstructed base mesh data, a displacement information encoder configured to encode the displacement information and generating a displacement information bitstream, a displacement information reconstructor configured to reconstruct the encoded displacement information, a mesh reconstructor configured to reconstruct mesh data based on the reconstructed base mesh data and the reconstructed displacement information, a texture map generator configured to regenerate a texture map based on a texture map of the original mesh data and the reconstructed mesh data, and a texture map encoder configured to encode the regenerated texture map and generating a texture map bitstream.

According to embodiments, the signaling information may include sub-group-related signaling information, wherein the sub-group-related signaling information may include at least one of information for identifying the number of the one or more sub-groups, information for identifying a method of dividing the sub-groups, or information for identifying a coding type for the base mesh data.

According to embodiments, a method of receiving 3D data may include receiving a bitstream containing encoded mesh data and signaling information, decoding the encoded mesh data in the bitstream based on the signaling information, and rendering the decoded mesh data.

According to embodiments, the decoding of the mesh data may include determining a target sub-group based on a user-selected target region and the signaling information, and extracting a bitstream of the target sub-group from the bitstream, and reconstructing mesh data of the target sub-group by performing decoding based on the extracted bitstream of the target sub-group.

### [Advantageous Effects]

According to embodiments, a 3D data transmission method, 3D data transmission apparatus, 3D data reception method, and 3D data reception apparatus may provide good-quality 3D services.

According to embodiments, a 3D data transmission method, 3D data transmission apparatus, 3D data reception method, and 3D data reception apparatus may achieve various video codec schemes.

According to embodiments, a 3D data transmission method, 3D data transmission apparatus, 3D data reception method, and 3D data reception apparatus may support universal 3D content, such as for autonomous driving services.

According to embodiments, a 3D data transmission method, 3D data transmission apparatus, 3D data reception method, and 3D data reception apparatus may allow mesh data to be partitioned into one or more sub-groups, and enable encoding and decoding to be performed on a per-sub-group basis, thereby allowing access to only mesh data corresponding to a user-specified partial region.

According to embodiments, a 3D data transmission method, 3D data transmission apparatus, 3D data reception method, and 3D data reception apparatus may allow the transmitting side to perform sub-group-based encoding after partitioning mesh data into one or more sub-groups, and allow the receiving side to receive mesh region information related to a necessary region from the user through a device or software configured to render the mesh data, and decode and display only the mesh data of the partial region, thereby providing a significantly more efficient service in terms of processing time and resource usage compared to processing the entire mesh data.

According to embodiments, a 3D data transmission method, 3D data transmission apparatus, 3D data reception method, and 3D data reception apparatus may enable mesh data to be utilized in various network environments and applications, and expand the usability of the mesh data by allowing flexible use of the resources of the receiver.

### [Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:
FIG. 1 illustrates a system for providing dynamic mesh content according to embodiments;
FIG. 2 illustrates a V-MESH compression method according to embodiments;
FIG. 3 illustrates pre-processing in V-MESH compression according to embodiments;
FIG. 4 illustrates a mid-edge subdivision method according to embodiments;
FIG. 5 illustrates a displacement generation process according to embodiments;
FIG. 6 illustrates an intra-frame encoding process for V-MESH data according to embodiments;
FIG. 7 illustrates an inter-frame encoding process for V-MESH data according to embodiments;
FIG. 8 illustrates a lifting transform process for displacements according to embodiments;
FIG. 9 illustrates a process of packing transform coefficients into a 2D image according to embodiments;
FIG. 10 illustrates an attribute transfer process in a V-MESH compression method according to embodiments;
FIG. 11 illustrates an intra-frame decoding process for V-MESH data according to embodiments;
FIG. 12 illustrates an inter-frame decoding process for V-MESH data according to embodiments;
FIG. 13 illustrates a mesh data transmission apparatus according to embodiments;
FIG. 14 illustrates a mesh data reception apparatus according to embodiments;
FIGS. 15(a) to 15(c) are diagrams illustrating examples of sub-group generation according to embodiments;
FIG. 16 illustrates an example of information for identifying a sub-group generation method according to embodiments;
FIG. 17 illustrates an example syntax structure of sub-group-related information including information for identifying a sub-group generation method according to embodiments;
FIG. 18 is a diagram illustrating an example method of determining sub-groups for vertices positioned at sub-group boundaries according to embodiments;
FIG. 19 is a diagram illustrating an example result of sub-group-based atlas parameterization according to embodiments;
FIG. 20 is a diagram illustrating a first embodiment of a base mesh bitstream generation method according to the present disclosure;
FIG. 21 is a diagram illustrating a second embodiment of the base mesh bitstream generation method according to the present disclosure;
FIG. 22 illustrates an example syntax structure of sub-group index information for each base mesh vertex/texture coordinate according to embodiments;
FIG. 23 illustrates an example syntax structure of sub-group index information for each base mesh polygon/texture polygon according to embodiments;
FIG. 24 illustrates an example of type information for identifying a sub-group encoding method according to embodiments;
FIG. 25 illustrates an example syntax structure of sub-group base mesh coding information according to embodiments;
FIG. 26 is a diagram illustrating an example of a sub-group-specific motion field bitstream according to embodiments;
FIG. 27 is a diagram illustrating another example of the sub-group-specific motion field bitstream according to embodiments;
FIG. 28 illustrates an example syntax structure of sub-group index information for each mesh vertex/texture coordinate according to embodiments;
FIG. 29 illustrates an example syntax structure of sub-group index information for each mesh polygon/texture polygon according to embodiments;
FIG. 30 is a block diagram illustrating another example of a transmission apparatus according to embodiments;
FIG. 31 is a block diagram illustrating another example of a reception apparatus according to embodiments;
FIG. 32 is a flowchart illustrating an example of a transmission method according to embodiments; and
FIG. 33 is a flowchart illustrating an example of a reception method according to embodiments.

### [Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

With recent advancements in 3D data modeling and rendering technologies, research on generating and processing 3D data has been actively conducted across various fields, including virtual reality (VR), augmented reality (AR), autonomous driving, computer-aided design (CAD)/computer-aided manufacturing (CAM), and geographic information systems (GIS). 3D data may be represented as a point cloud or a mesh depending on the representation format. A mesh is composed of geometry information indicating the coordinates of each vertex or point, connectivity information indicating connections between vertices, a texture map representing color information about the mesh surface as 2D image data, and texture coordinates indicating the mapping information between the surface of the mesh and the texture map. In the present disclosure, a mesh is defined as a dynamic mesh when at least one of the elements constituting the mesh changes over time, and is defined as a static mesh when it does not change.

Dynamic mesh data involves significantly larger amounts of data of elements to represent the mesh compared to 2D image data. As a result, techniques for efficiently compressing a large amount of mesh data have been developed to store and transmit the data.

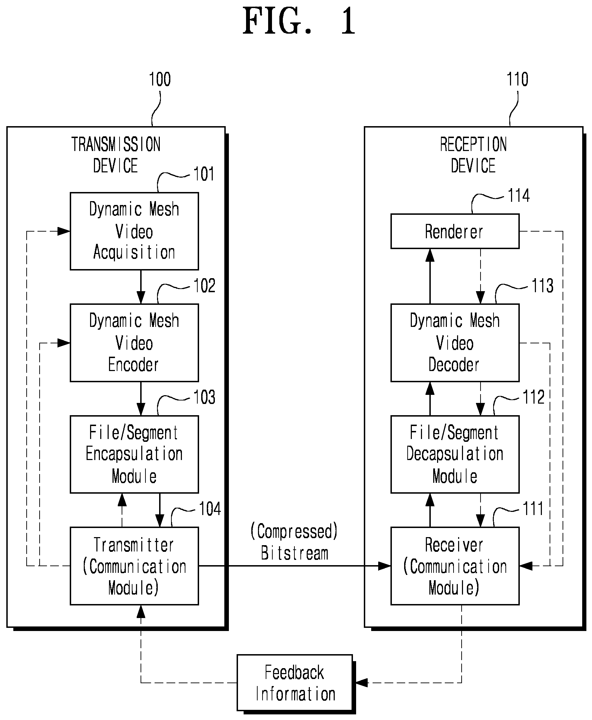

FIG. 1 illustrates a system for providing dynamic mesh content according to embodiments.

The system in FIG. 1 includes a transmission apparatus 100 and a reception apparatus 110. The transmission apparatus 100 may include a mesh video acquisition unit (or part) 101, a mesh video encoder 102, a file/segment encapsulator 103, and a transmitter 104. The reception apparatus 110 may include a receiver 111, a file/segment decapsulator 112, a mesh video decoder 113, and a renderer 114. Each component in FIG. 1 may correspond to hardware, software, a processor, and/or a combination thereof. In the following description, a mesh data transmission apparatus according to embodiments may be interpreted as referring to a 3D data transmission apparatus or transmission apparatus 100, or as referring to a mesh video encoder (hereinafter, encoder) 102. A mesh data reception apparatus according to embodiments may be interpreted as referring to a 3D data reception apparatus or reception apparatus 110, or as referring to a mesh video decoder (hereinafter, decoder) 113.

The system of FIG. 1 may perform video-based dynamic mesh compression and decompression.

With advancements in 3D capture, modeling, and rendering, users are allowed to access 3D content in various forms, such as AR, XR, metaverse, and holograms, across multiple platforms and devices. 3D content is increasingly becoming sophisticated and realistic in its representation of objects to provide immersive experiences for users. However, this requires a substantial amount of data for generation and use of 3D models. Among the various types of 3D content, 3D meshes are widely used for efficient data utilization and realistic object representation. Embodiments include a series of processing steps in a system that uses mesh content.

First, the method of compressing dynamic mesh data starts with the Video-based point cloud compression (V-PCC) standard technique for point cloud data. Point cloud data is data that has color information in the coordinates (X, Y, Z) of vertices (or points). In the present disclosure, vertex coordinates (i.e., position information) are referred to as geometry information, color information about vertices is referred to as attribute information. The geometry information and attribute information are together referred to as vertex information or point cloud data. Mesh data refers to vertex information including inter-vertex connectivity information. Content may be originally created in the form of mesh data. Alternatively, connectivity information may be added to point cloud data, and the point cloud data may be transformed into mesh data.

Currently, the MPEG standards group defines two data types for dynamic mesh data: Category 1 of mesh data having a texture map as color information, and Category 2 of mesh data having vertex colors as color information.

Mesh coding standards for Category 1 data are currently underway, and standardization for Category 2 data is expected to follow. The overall process for providing a mesh content service may include acquisition, encoding, transmission, decoding, rendering, and/or feedback processes, as shown in FIG. 1.

To provide mesh content services, 3D data acquired through multiple cameras or special cameras may be processed into a mesh data type through a series of steps to generate a mesh video. The generated mesh video may be transmitted through a series of operations, and the receiving side may process the received data back into a mesh video for rendering. Through this process, the mesh video may be provided to the user, allowing the user to utilize the mesh content interactively according to their intent.

As shown in FIG. 1, a mesh compression system may include a transmission apparatus 100 and a reception apparatus 110. The transmission apparatus 100 may encode the mesh video to output a bitstream, which may be delivered to the reception apparatus 110 over a digital storage medium or a network in the form of file or streaming (streaming segments). The digital storage medium may include various storage media such as USB, SD, CD, DVD, Blu-ray, HDD, and SSD.

In the transmission apparatus 100, the encoder may be referred to as a mesh video/image/picture/frame encoding device. In the reception apparatus 110, the decoder may be referred to as a mesh video/image/picture/frame decoding device. A transmitter may be included in the mesh video encoder, and a receiver may be included in the mesh video decoder. The renderer 114 may include a display, and the renderer and/or display may be configured as separate devices or external components. The transmission apparatus 100 and reception apparatus 110 may further include separate internal or external modules/units/components for the feedback process.

Mesh data represents the surface of an object using multiple polygons. Each polygon is defined by vertices in 3D space and connectivity information indicating how the vertices are connected. Additionally, vertex attributes such as color and normal vectors may be included in the data. Mapping information, which allows the surface of the mesh to be mapped onto a 2D plane, may also be included in the attributes of the mesh. The mapping is generally described using a set of parametric coordinate related to mesh vertices, referred to as UV coordinates or texture coordinates, related to related to the vertices of the mesh. A mesh contains a 2D attribute map, which may be used to store high-resolution attribute information such as texture, normal, and displacement. Here, the displacement may be used interchangeably with displacement information or a displacement vector.

The mesh video acquisition unit 101 may include processing 3D object data acquired through a camera or the like into a mesh data type having the attributes described above through a series of operations and generating a video composed of the mesh data. In the mesh video, the attributes of the mesh, such as vertices, polygons, connectivity between vertices, color, and normal, may change over time. A mesh video with attributes and connectivity information that change over time is referred to as a dynamic mesh video.

The mesh video encoder 102 may encode an input mesh video into one or more video streams. A video may contain multiple frames, each of which may correspond to a still image/picture. In the present disclosure, the mesh video may include mesh images/frames/pictures. The term "mesh video" may be used interchangeably with mesh images/frames/pictures. The mesh video encoder 102 may perform a Video-based Dynamic Mesh (V-Mesh) compression procedure. For compression and coding efficiency, the mesh video encoder 102 may perform a series of procedures such as prediction, transformation, quantization, and entropy coding. Encoded data (encoded video/image information) may be output in the form of a bitstream.

The file/segment encapsulation module 103 may encapsulate encoded mesh video data and/or mesh video-related metadata in the form of a file or the like. The mesh video-related metadata may be received from a metadata processor. The metadata processing unit may be included in the mesh video encoder 102, or may be configured as a separate component/module. The file/segment encapsulation module 103 may encapsulate the data into a file format such as ISOBMFF or process the same into forms such as DASH segments. According to embodiments, the file/segment encapsulator 103 may include the mesh video-related metadata in the file format. For example, the mesh video metadata may be included in boxes at various levels in the ISOBMFF file format, or as data on separate tracks in the file. In some embodiments, the file/segment encapsulator 103 may encapsulate the mesh video-related metadata into a file.

The transmission processor may apply processing to the encapsulated mesh video data for transmission based on the file format. The transmission processor may be included in the transmitter 104 or implemented as a separate component/module. The transmission processor may process the mesh video data according to any transmission protocol. The processing for transmission may include processing for delivery over a broadcast network and processing for delivery over a broadband. In some embodiments, the transmission processor may receive mesh video-related metadata from the metadata processor, as well as the mesh video data, and process the same for transmission.

The transmitter 104 may transmit the encoded video/image information or data output in bitstream form to the receiver 111 of the reception apparatus 110 over a digital storage medium or network in the form of a file or streaming. The digital storage medium may include various storage media such as USB, SD, CD, DVD, Blu-ray, HDD, and SSD. The transmitter 104 may include an element to generate a media file through a predetermined file format, and may include an element for transmission over a broadcast/communication network. The receiver 111 may extract the bitstream and deliver the same to a decoding device.

The receiver 111 may receive the mesh video data transmitted by the mesh data transmission apparatus. Depending on the channel for transmission, the receiver 111 may receive the mesh video data over a broadcast network or a broadband network, or may receive the mesh video data over a digital storage medium.

The reception processor may perform processing on the received mesh video data according to the transmission protocol. The reception processor may be included in the receiver 111, or may be configured as a separate component/module. To correspond to the processing performed for transmission on the transmitting side, the reception processor may perform the reverse process to the operations of the transmission processor described above. The reception processor may deliver the acquired mesh video data to the file/segment decapsulator 112 and the acquired mesh video-related metadata to the metadata parser. The mesh video-related metadata acquired by the reception processor may be in the form of a signaling table.

The file/segment decapsulator 112 may decapsulate mesh video data in the form of files received from the reception processor. The file/segment decapsulator 112 may decapsulate the files according to ISOBMFF or the like to acquire a mesh video bitstream or mesh video-related metadata (metadata bitstream). The acquired mesh video bitstream may be delivered to the mesh video decoder 113, and the acquired mesh video-related metadata (metadata bitstream) may be delivered to the metadata processor. The mesh video bitstream may include metadata (metadata bitstream). The metadata processor may be included in the mesh video decoder 113, or may be configured as a separate component/module. The mesh video-related metadata acquired by the file/segment decapsulator 112 may be in the form of boxes or tracks in the file format. The file/segment decapsulator 112 may receive metadata required for decapsulation from the metadata processor, when necessary. The mesh video-related metadata may be delivered to the mesh video decoder 113 for use in the mesh video decoding procedure, or to the renderer 114 for use in the mesh video rendering procedure.

The mesh video decoder 113 may receive the input bitstream and perform the reverse operation corresponding to the operation of the mesh video encoder 102 to decode the video/images. The decoded mesh video/images may be displayed through the display of the renderer 114. The user may view all or a portion of the rendered result through a VR/AR display, a general display, or the like.

The feedback process may include transmitting various kinds of feedback information that may be acquired during the rendering/display operation to the transmitting side or to the decoder on the receiving side. The feedback process may provide interactivity in consuming the mesh video. In some embodiments, the feedback process may include transmitting head orientation information, viewport information indicative of an area the user is currently viewing, and the like. In some embodiments, the user may interact with objects implemented in the VR/AR/MR/autonomous driving environment. In this case, the information related to the interaction may be delivered to the transmitting side or service provider during the feedback process. In some embodiments, the feedback process may be skipped.

The head orientation information may refer to information about the user's head position, angle, movement, etc. Based on this information, information about the area that the user is currently viewing within the mesh video, i.e., viewport information, may be calculated.

The viewport information may be information about the area in the mesh video that the user is currently viewing. Gaze analysis may be performed based on this information to determine how the user consumes the mesh video, how long the user is looking at a particular area of the mesh video, and the like. The gaze analysis may be performed on the receiving side and the result may be delivered to the transmitting side through a feedback channel. A device, such as a VR/AR/MR display, may extract a viewport area based on the user's head position/orientation, the vertical or horizontal FOV supported by the device, etc.

In some embodiments, the feedback information described above may not only be delivered to the transmitter, but may also be consumed on the receiving side. In other words, operations such as decoding and rendering may be performed on the receiving side based on the feedback information described above. For example, based on the head orientation information and/or viewport information, only the mesh video for the area currently being viewed by the user may be preferentially decoded and rendered.

The present disclosure relates to embodiments of dynamic mesh video compression as described above. The methods/embodiments disclosed herein may be applied to the standard of Video-based Dynamic mesh compression (V-Mesh) of the Moving Picture Experts Group (MPEG) or any next-generation video/image coding standard. Dynamic mesh video compression is a method for processing mesh connectivity information and attributes that change over time. It may perform lossy and lossless compression for a variety of applications such as real-time communications, storage, free-viewpoint video, and AR/VR.

The dynamic mesh video compression method described below is based on the V-mesh method of the MPEG.

In the present disclosure, a picture/frame may generally refer to a unit that represents one image at a specific time.

A pixel or pel may refer to the smallest unit that constitutes a picture (or video). Additionally, the term "sample" may be used as a term corresponding to a pixel. A sample may generally indicate a pixel or the value of the pixel in general. It may indicate only the pixel/pixel value of the luma component, or may indicate only the pixel/pixel value of the chroma component, or may indicate only the pixel/pixel value of the depth component.

A unit may represent the basic unit of image processing. The unit may include at least one of a specific area of the picture and information related to the region. In some cases, the term unit may be used interchangeably with terms such as block or area. In general, an MxN block may include a set (or array) of samples (or a sample array) or transform coefficients composed of M columns and N rows.

As described above, the encoding process of FIG. 1 is performed as follows.

In other words, the compression method of Video-based dynamic mesh compression (V-Mesh) may provide a method of compressing dynamic mesh video data based on 2D video codecs such as High Efficiency Video Coding (HEVC) and Versatile Video Coding (VVC). In the V-Mesh compression process, the following data is received as input and compressed.

Input mesh: Includes 3D coordinates of the vertices comprising the mesh, normal information about each vertex, mapping information for mapping the surface of the mesh to a 2D plane, and connectivity between the vertices constituting the surface. The surface of the mesh may be represented by triangles or other polygons, and the connectivity information between the vertices constituting the surface is stored according to a predetermined shape. The input mesh may be stored in the OBJ file format.

Attribute map (Texture map is also used interchangeably hereafter): Contains information about the attributes (color, normals, displacements, etc.) of a mesh and stores the data in the form of a mapping of the surface of the mesh onto a 2D image. Mapping indicating which part (surface or vertex) of the mesh corresponds to each piece of data in the attribute map is based on the mapping information contained in the input mesh. Since the attribute map has data about each frame of the mesh video, it may also be referred to as an attribute map video. The attribute map in the V-Mesh compression method mainly contains the color information about the mesh and is stored in an image file format (PNG, BMP, etc.).

Material library file: Contains the material attribute information used in the mesh, specifically the information that links the input mesh to the corresponding attribute map. It is stored in the Wavefront Material Template Library (MTL) file format.

In the V-Mesh compression method, the following data and information may be generated through the compression process.

Base mesh: Represents the objects in the input mesh using the minimum vertices determined according to the user's criteria by decimating the input mesh through the pre-processing process.

Displacement: Displacement information used to represent the input mesh as similarly as possible using the base mesh, expressed in 3D coordinates.

Atlas information: Metadata needed to reconstruct a mesh using the base mesh, displacement, and attribute map information. It may be generated and utilized in sub-units (sub-mesh, patch, etc.) that constitute the mesh.

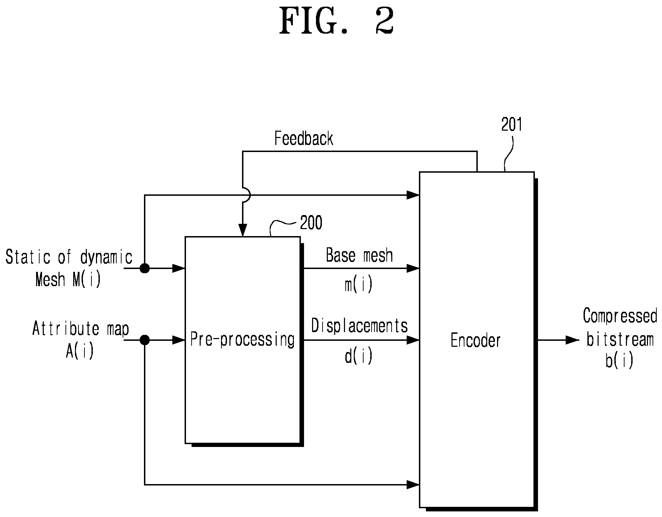

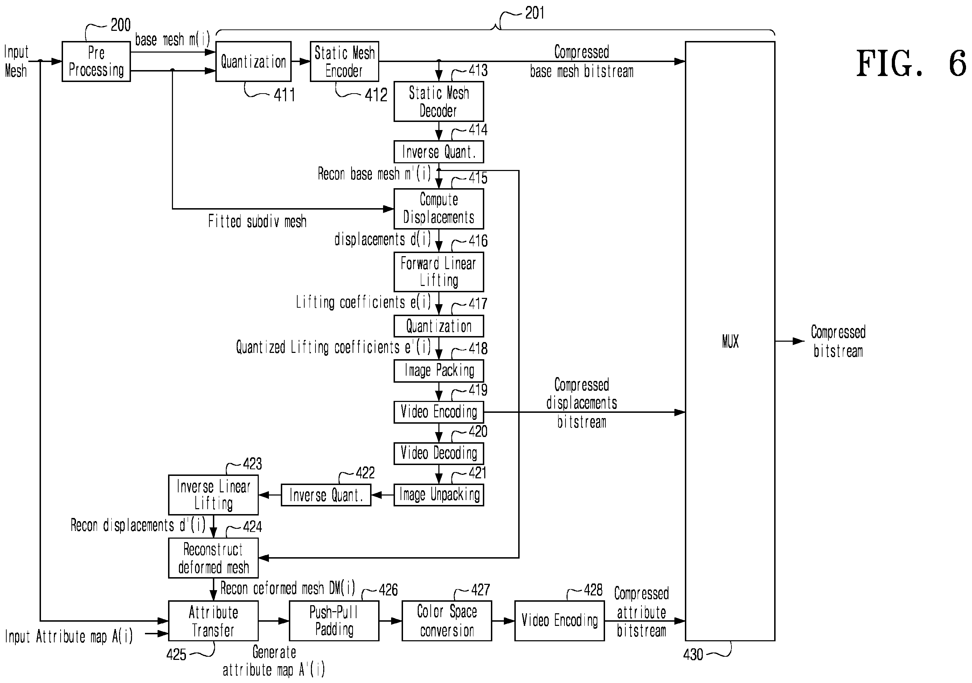

A method of encoding mesh position information (or vertex position information) is described with reference to FIGS. 2 to 7, and a method of reconstructing mesh position information to encode attribute information (attribute map) is described with reference to FIGS. 6 to 10 and the like.

FIG. 2 illustrates a V-MESH compression method according to embodiments.

FIG. 2 illustrates the encoding process of FIG. 1, wherein the encoding process may include a pre-processing process and an encoding process. The mesh video encoder 102 of FIG. 1 may include a pre-processor 200 and an encoder 201, as shown in FIG. 2. Also, the transmission apparatus of FIG. 1 may be broadly referred to as an encoder, and the mesh video encoder 102 of FIG. 1 may be referred to as an encoder. The V-Mesh compression method may include pre-processing 200 and encoding 201, as shown in FIG. 2. The pre-processor 200 of FIG. 2 may be positioned at the front end of the encoder 201 of FIG. 2. The pre-processor 200 and encoder 201 of FIG. 2 may be referred to as a single encoder.

The pre-processor 200 may receive a static of dynamic mesh (M(i)) and/or an attribute map (A(i)). The pre-processor 200 may generate a base mesh m(i) and/or displacements d(i) through pre-processing. The pre-processor 200 may receive feedback information from the encoder 201, and may generate the base mesh and/or displacements based on the feedback information.

The encoder 201 may receive the base mesh m(i), the displacements d(i), the static of dynamic mesh M(i), and/or the attribute map A(i). In the present disclosure, at least one of the base mesh m(i), the displacements d(i), the static of dynamic mesh M(i), and/or the attribute map A(i) may be referred to herein as mesh-related data. The encoder 201 may encode the mesh-related data to generate a compressed bitstream.

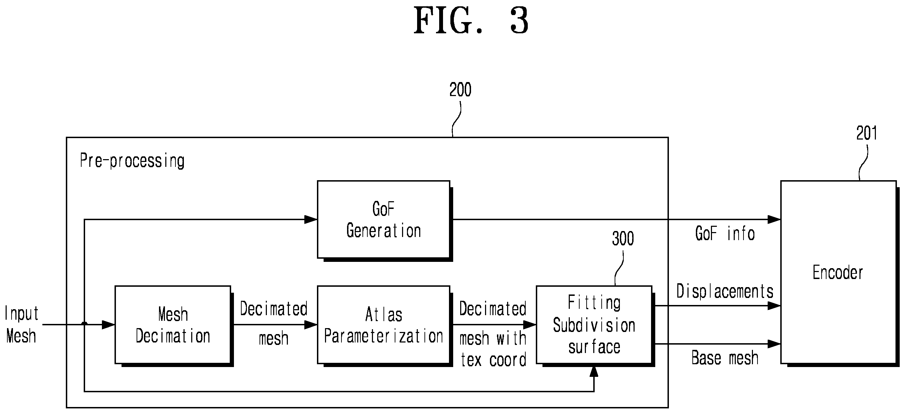

FIG. 3 illustrates pre-processing in V-MESH compression according to embodiments.

FIG. 3 illustrates the configuration and operation of the pre-processor of FIG. 2. In FIG. 3, the input mesh may include a static of dynamic mesh M(i) and/or attribute map A(i). The input mesh may also include 3D coordinates of vertices constituting the mesh, normal information about each vertex, mapping information for mapping the mesh surface to a 2D plane, and connectivity information between the vertices constituting the surface.

FIG. 3 illustrates the process of performing pre-processing on the input mesh. The pre-processing 200 may include four operations: 1) Group of Frame (GoF) generation, 2) mesh decimation, 3) UV parameterization, and 4) fitting subdivision surface

(300). According to embodiments, the GoF generation may be referred to as a GoF generation process or a GoF generator, the mesh decimation may be referred to as a mesh simplification process or the mesh decimation part, the UV parameterization may be referred to as a UV parameterization process or the UV parameterization part, and the fitting subdivision surface may be referred to as a fitting subdivision surface process or a fitting subdivision surface part. The pre-processor 200 may generate displacements and/or a base mesh from the received input mesh, and deliver the same to the encoder 201. The pre-processor 200 may deliver GoF information related to the GoF generation to the encoder 201.

Hereinafter, each operation of FIG. 3 is described.

GoF generation: A process of generating a reference structure for the mesh data. When the mesh of the previous frame and the current mesh have the same number of vertices, same number of texture coordinates, same vertex connectivity information, and same texture coordinate connectivity information, the previous frame may be set as a reference frame. In other words, if only the vertex coordinate values are different between the current input mesh and the reference input mesh, the encoder 201 may perform inter frame encoding. Otherwise, it performs intra frame encoding for the frame.

Mesh decimation: A process of simplifying the input mesh to create a simplified mesh, called a base mesh. Vertices to remove may be selected from the original mesh based on user-defined criteria, and then the selected vertices and the triangles connected to the selected vertices may be removed.

In the process of performing mesh decimation, the voxelized input mesh, target triangle ratio (TTR), and minimum triangle component (CCCount) information may be delivered as input, and the decimated mesh may be obtained as output. In the process, connected triangle components that are smaller than the set minimum triangle component (CCCount) may be removed.

UV parameterization: A process of mapping a 3D curved surface into a texture domain for the decimated mesh. Parameterization may be performed using the UVAtlas tool. This process generates mapping information indicating where each vertex of the decimated mesh may be mapped to on the 2D image. The mapping information is expressed and stored as texture coordinates, and the final base mesh is generated through this process.

Fitting subdivision surface (300): A process of performing subdivision on the decimated mesh (i.e., a decimated mesh with texture coordinates). The displacements and base mesh generated by this process are output to the encoder 201. A user-defined method, such as the mid-edge method, may be applied as the subdivision method. A fitting process is performed such that the input mesh and the subdivided mesh become similar to each other. The mesh on which the fitting process is performed will be referred to herein as the fitted subdivided mesh.

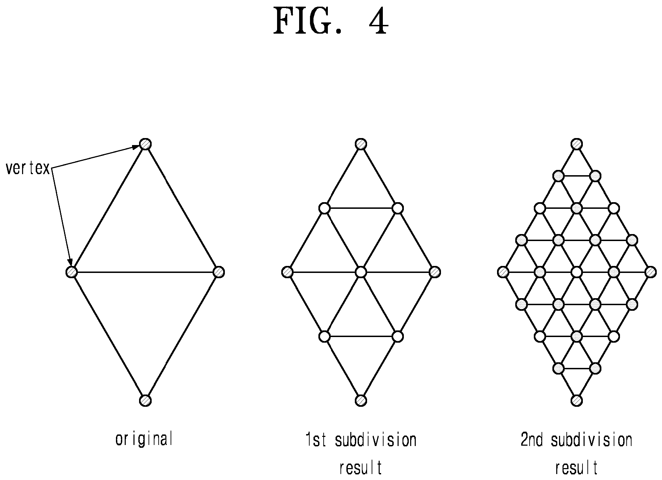

FIG. 4 illustrates a mid-edge subdivision method according to embodiments.

FIG. 4 illustrates a mid-edge subdivision method for the fitting subdivision surface described with reference to FIG. 3. Referring to FIG. 4, the original mesh containing four vertices is subdivided to create sub-meshes. The sub-meshes may be created by creating new vertices in the middle of the edges between the vertices. Then, the fitting process is performed to make the input mesh and the sub-mesh similar to each other, resulting in a fitted subdivided mesh.

Once the fitted subdivided mesh is generated, the displacements are calculated based on this result and the previously compressed and decoded base mesh (hereinafter referred to as the reconstructed base mesh). In other words, the reconstructed base mesh is subdivided in the same way as the fitting subdivision surface. The difference in position between this result and each vertex in the fitted subdivided mesh is the displacement for each vertex. Since the displacement represents a difference in position in 3D space, it is expressed as values in (x, y, z) space in the Cartesian coordinate system. Depending on a user input parameter, the coordinate values of (x, y, z) may be converted to coordinate values of (normal, tangential, bi-tangential) in a local coordinate system.

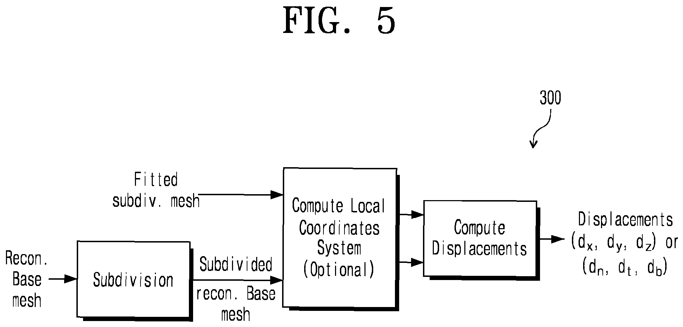

FIG. 5 illustrates a displacement generation process according to embodiments. The displacement generation process of FIG. 5 may be performed by the pre-processor 200, or may be performed by the encoder 201.

FIG. 5 illustrates in detail how displacements are calculated for the fitting subdivision surface 300, as described with reference to FIG. 4.

The encoder and/or pre-processor according to the embodiments may include 1) a subdivider, 2) a local coordinate system calculator, and 3) a displacement vector calculator. The subdivider may perform a subdivision on the reconstructed base mesh to generate a subdivided reconstructed base mesh. Here, the reconstruction of the base mesh may be performed by the pre-processor 200, or may be performed by the encoder 201. The local coordinate system calculator may receive the fitted subdivided mesh and the subdivided reconstructed base mesh, and may transform the coordinate system related to the mesh to a local coordinate system based on the received meshes. The local coordinate system calculation may be optional. The displacement calculator calculates the difference in position between the fitted subdivision mesh and the subdivided reconstructed base mesh. For example, it may generate the difference in position between the vertices in the two input meshes. The difference in position between the vertices is the displacement.

The mesh data transmission method and apparatus according to embodiments may encode the mesh data as follows. Mesh data is a term that includes point cloud data. Point cloud data (which may be referred to as a point cloud for short) according to embodiments may refer to data including vertex coordinates (also referred to as geometry information) and color information (also referred to as attribute information). In addition, a geometry image, an attribute image, an occupancy map, and auxiliary information (also referred to as patch information) generated through patch generation and packing based on vertex coordinates and color information may also be referred to as point cloud data. Therefore, point cloud data including connectivity information may be referred to as mesh data. The terms point cloud and mesh data may be used interchangeably herein.

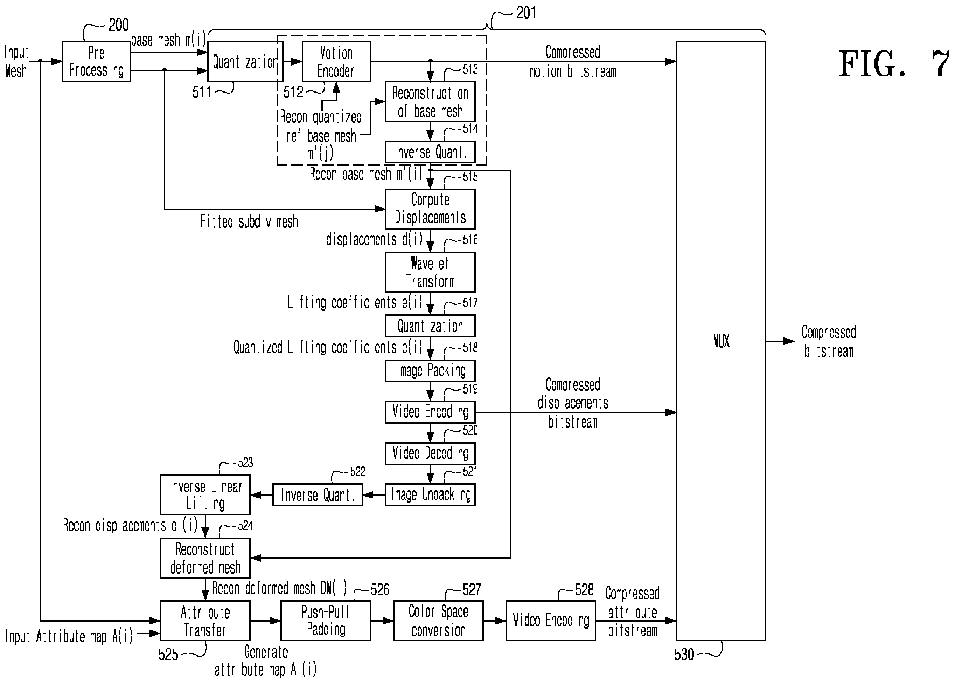

According to embodiments, the V-Mesh compression (reconstruction) method may include intra frame encoding (FIG. 6) and inter frame encoding (FIG. 7).

Based on the results of the GoF generation described above, intra frame encoding or inter frame encoding is performed. In the intra encoding, the data to be compressed may be a base mesh, displacements, an attribute map, and the like. In the inter encoding, the data to be compressed may be displacements, an attribute map, and a motion field between the reference base mesh and the current base mesh.

FIG. 6 illustrates an intra-frame encoding process in a V-MESH compression method according to embodiments. Each component for the intra-frame encoding process of FIG. 6 corresponds to hardware, software, a processor, and/or a combination thereof.

The encoding process of FIG. 6 details the encoding of the mesh video encoder 102 of FIG. 1. That is, it represents the configuration of the mesh video encoder 102 when the encoding of FIG. 1 is intra-frame encoding. The encoder of FIG. 6 may include a pre-processor 200 and/or an encoder 201. The pre-processor 200 and encoder 201 of FIG. 6 may correspond to the pre-processor 200 and encoder 201 of FIG. 3.

The pre-processor 200 may receive an input mesh and perform the pre-processing described above. A base mesh and/or a fitted subdivided mesh may be generated through the pre-processing.

The quantizer 411 of the encoder 201 may quantize the base mesh and/or the fitted subdivided mesh. The static mesh encoder 412 may encode the static mesh (i.e., the quantized base mesh) and generate a bitstream containing the encoded base mesh (i.e., a compressed base mesh bitstream). The static mesh decoder 413 may decode the encoded static mesh (i.e., the encoded base mesh). The inverse quantizer 414 may inversely quantize the quantized static mesh (i.e., base mesh) and output a reconstructed (restored) base mesh. The displacement calculator 415 may generate a displacement or displacements based on the reconstructed static mesh (i.e., base mesh) and the fitted subdivided mesh. According to embodiments, the displacement calculator 415 subdivides the reconstructed base mesh and then calculates a displacement, which is the difference in position of each vertex between the subdivided base mesh and the fitted subdivided mesh. In other words, the displacement is a displacement vector that is the difference in position between the vertices in the two meshes when the fitted subdivided mesh is similar to the original mesh. The forward linear lifter 416 may perform a lifting transform on the input displacements to generate lifting coefficients (also referred to as a transform coefficient). The quantizer 417 may quantize the lifting coefficients. The image packer 418 may pack the image based on the quantized lifting coefficients. The video encoder 419 may encode the packed image. That is, the quantized lifting coefficients are packed into a frame as a 2D image by the image packer 418, compressed by the video encoder 419, and output as a displacement bitstream (i.e., a compressed displacement bitstream).

The video decoder 420 decodes the compressed displacement bitstream. The image unpacker 421 may perform unpacking on the decoded displacement frame to output quantized lifting coefficients. The inverse quantizer 422 may inversely quantize the quantized lifting coefficients. The inverse linear lifting unit 423 applies inverse lifting to the inversely quantized lifting coefficients to generate reconstructed displacements. The mesh reconstructor 424 restores the reconstructed and deformed mesh based on the reconstructed displacements output from the inverse linear lifting unit 423 and the reconstructed base mesh (also referred to as the subdivided reconstructed base mesh) output from the inverse quantizer 414. The reconstructed and deformed mesh is referred to herein as the reconstructed deformed mesh.

The attribute transfer 425 receives an input mesh and/or an input attribute map and regenerates an attribute map based on the reconstructed deformed mesh. The attribute map refers to a texture map corresponding to attribute information among the mesh data components. In the present disclosure, the terms attribute map and texture map may be used interchangeably. The push-pull padding unit 426 may pad data to the attribute map based on a push-pull method. The color space converter 427 may convert the space of the color components of the attribute map. For example, the attribute map may be converted from an RGB color space to a YUV color space. The video encoder 428 may encode the attribute map to output a compressed attribute bitstream.

The multiplexer 430 may multiplex the compressed base mesh bitstream, the compressed displacement bitstream, and the compressed attribute bitstream to generate a compressed bitstream.

In FIG. 6, the displacement calculator 415 may be included in the pre-processor 200. Additionally, at least one of the quantizer 411, the static mesh encoder 412, the static mesh decoder 413, or the inverse quantizer 414 may be included in the pre-processor 200.

As described in FIG. 6, the intra frame encoding method includes base mesh encoding (also referred to as static mesh encoding). That is, when intra frame encoding is performed on the current input mesh frame, the base mesh generated during the pre-processing of the pre-processor 200 may be quantized by the quantizer 411 and then encoded by the static mesh encoder 412 using a static mesh compression technique. In the V-Mesh compression method, for example, the Draco technique is applied to encode the base mesh, and the vertex position information, mapping information (texture coordinates), vertex connectivity information, and the like related to the base mesh are subject to compression.

The encoder in FIG. 6 compresses the base mesh, displacements, and attributes in a frame to generate a bitstream, while the encoder in FIG. 7 compresses the motion, displacements, and attributes between the current frame and a reference frame to generate a bitstream.

FIG. 7 illustrates an inter-frame encoding process in a V-MESH compression method according to embodiments. Each component for the inter-frame encoding process of FIG. 7 corresponds to hardware, software, a processor, and/or a combination thereof.

The encoding process of FIG. 7 details the encoding of FIG. 1 in detail. That is, it represents the configuration of the encoder when the encoding of FIG. 1 is inter-frame encoding. The encoder of FIG. 7 may include a pre-processor 200 and/or an encoder 201. The pre-processor 200 and encoder 201 of FIG. 7 may correspond to the pre-processor 200 and encoder 201 of FIG. 3.

For the components of the encoding operation of FIG. 7 that correspond to the encoding operation of FIG. 6, refers to the description of FIG. 6. That is, the operations of the quantizer 511, displacement calculator 515, wavelet transformer 516, quantizer 517, image packer 518, video encoder 519, video decoder 520, image unpacker 521, inverse quantizer 522, and inverse wavelet transformer 523, mesh reconstructor 524, attribute transfer 525, push-pull padding 526, color space converter 527, video encoder 528, and multiplexer 530 in FIG. 7 are the same as or similar to the operations of the quantizer 411, static mesh encoder 412, static mesh decoder 413, and inverse quantizer 414, displacement calculator 415, forward linear lifting unit 416, quantizer 417, image packer 418, video encoder 419, video decoder 420, image unpacker 421, inverse quantizer 422, inverse linear lifting unit 423, and mesh reconstructor 424, attribute transfer 425, push-pull padding 426, color space converter 427, video encoder 428, and multiplexer 430 in FIG. 6 described above, and are therefore not described in detail in relation to FIG. 7 to avoid redundancy.

In FIG. 7, for inter-frame-based encoding, the motion encoder 512 may obtain and encode a motion vector between the reconstructed quantized reference base mesh and the quantized current base mesh, and output a compressed motion bitstream. The motion encoder 512 may be referred to as a motion vector encoder. The base mesh reconstructor 513 may reconstruct a base mesh based on the reconstructed quantized reference base mesh and the encoded motion vectors. The reconstructed base mesh is inversely quantized by the inverse quantizer 514 and output to the displacement calculator 515.

In FIG. 7, the displacement calculator 515 may be included in the pre-processor 200. Additionally, at least one of the quantizer 511, motion encoder 512, base mesh reconstructor 513, or inverse quantizer 514 may be included in the pre-processor 200.

As described with reference to FIG. 7, the inter-frame encoding method may include motion field encoding (also referred to as motion vector encoding). Inter frame encoding may be performed when the reference mesh and the current input mesh have a one-to-one correspondence of vertices, and only the position information about the vertices differs therebetween. When inter frame encoding is performed, the base mesh may not be compressed. Instead, the difference between the vertices of the reference base mesh and the current base mesh, i.e., the motion field (or motion vector) may be computed and encoded. The reference base mesh is the result of quantizing the decoded base mesh data and is determined by the reference frame index determined in the GoF generation. The motion field may be encoded as it is. Alternatively, a predicted motion field may be calculated by averaging the motion fields of the reconstructed vertices among the vertices connected to the current vertex, and a residual motion field, which is the difference between the value of the predicted motion field and the value of the motion field of the current vertex, may be encoded. The value of the residual motion field may be encoded using entropy coding. Except for the motion field encoding in the inter frame encoding, the process of encoding the displacements and attribute map is the same as the structure of the intra frame encoding method except for the base mesh encoding.

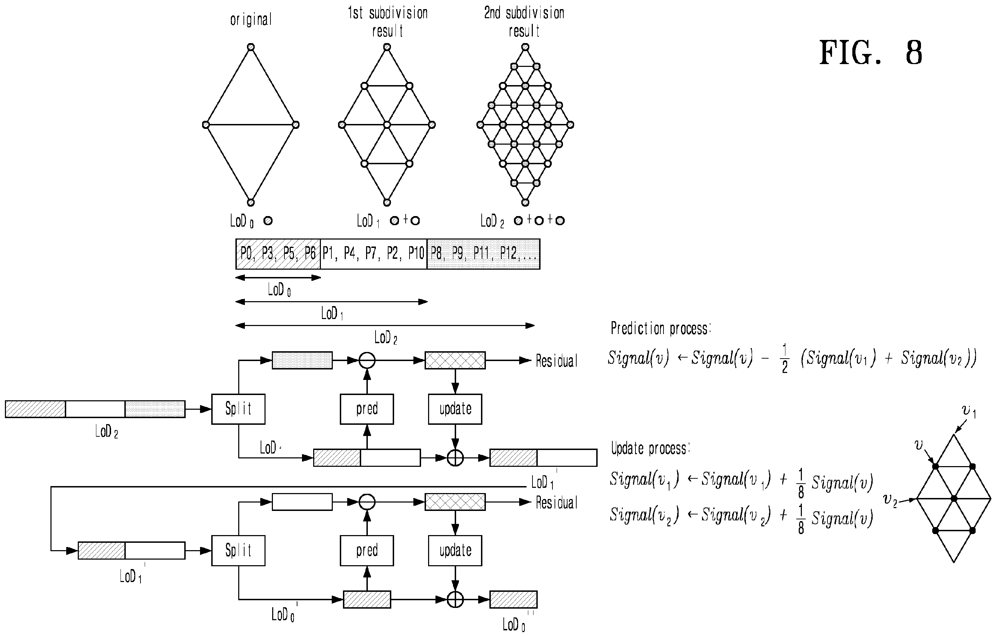

FIG. 8 illustrates a lifting transform process for displacements according to embodiments.

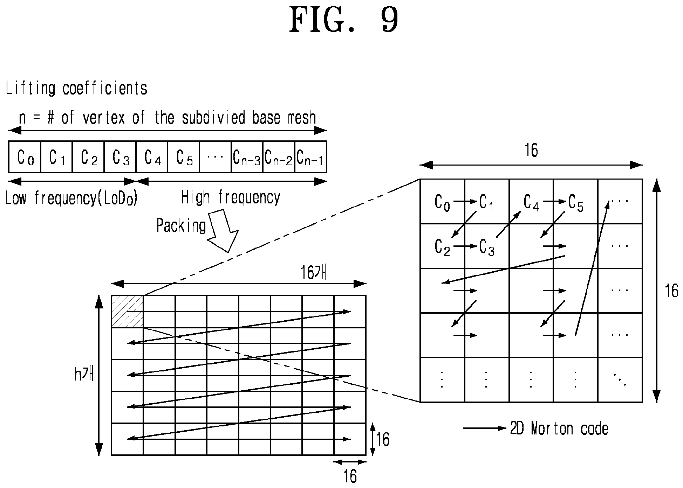

FIG. 9 illustrates a process of packing transform coefficients (also referred to as lifting coefficients) into a 2D image according to embodiments.

FIGS. 8 and 9 illustrate the process of transforming displacements and packing transform coefficients in the encoding process of FIGS. 6 and 7, respectively.

An encoding method according to the embodiments includes displacement encoding.

After base mesh encoding and/or motion field encoding, a reconstructed base mesh may be generated through reconstruction and inverse quantization, and a displacement may be calculated between a result of subdivision of the reconstructed base mesh and a fitted subdivided mesh generated through the fitting subdivision surface (see 415 in FIG. 6 or 515 in FIG. 7). A data transform process, such as a wavelet transform, may be applied to the displacement information for effective encoding (see 416 in FIG. 6, or 516 in FIG. 7).

FIG. 8 illustrates the process of transforming displacement information by the forward linear lifting unit 416 of FIG. 6 or the wavelet transformer 516 of FIG. 7 using the lifting transform. For example, a linear wavelet-based lifting transform may be performed. The transform coefficients generated through the transform process are quantized by the quantizer 417 (or 517) and then packed into a 2D image by the image packer 418 (or 518), as shown in FIG. 9. The transform coefficients may be organized into blocks, one block for every 256 (=16×16) units. Each block may be packed in a z-scan order. The number of rows in a block is fixed to 16, but the number of columns in the block may be determined by the number of vertices in the subdivided base mesh. Within a block, the transform coefficients may be sorted with the Morton code and packed. For the packed images, a displacement video may be generated per GoF. The displacement video may be encoded by the video encoder 419 (or 519) using a conventional video compression codec.

Referring to FIG. 8, the base mesh (original) may include vertices and edges for LoD0. A first subdivision mesh generated by splitting (or subdividing) the base mesh includes vertices generated by further splitting (or subdividing) the edges of the base mesh. The first subdivision mesh contains vertices for LoD0 and vertices for LoD1. LoD1 includes subdivided vertices and vertices from the base mesh (LoD0). The first subdivision mesh may be split (or subdivided) to generate a second subdivision mesh. The second subdivision mesh contains LoD2. LoD2 includes a base mesh vertex (LoD0), LoD1 containing vertices further split (or subdivided) from LoD0, and LoD2 containing vertices further split (or subdivided) from LoD1. LoD is a level of detail that indicates how detailed the mesh data content is. As the index of the level increases, the distance between vertices is shortened, and the level of detail rises. In other words, as the value of LoD decreases, the detail of the mesh data content is degraded. As the value of LoD increases, the detail of the mesh data content is enhanced. LoD N contains the vertices contained in LoD N-1. In the case where the mesh (or vertex) is further split through subdivision, the mesh may be encoded based on a prediction and/or updating method, taking into account the previous vertices v1 and v2, and the subdivided vertex v. Instead of encoding the information for the current LoD N as it is, a residual with respect to previous LoD N-1 may be generated. Thus, the mesh may be encoded using the residual to reduce the size of the bitstream. The prediction process refers to the operation of predicting the current vertex v from the previous vertices v1 and v2. Since neighboring subdivision meshes have similar data, this property may be exploited for efficient encoding. The current vertex position information is predicted from the residual for the previous vertex position information, and the previous vertex position information is updated through the residual. In the present disclosure, vertex and point may be used interchangeably. The LoDs may be defined in the subdivision of the base mesh. According to embodiments, the subdivision of the base mesh may be performed by the pre-processor 200 or may be performed by a separate component/module.

Referring to FIG. 9, a vertex has a transform coefficient (also referred to as a lifting coefficient) generated through lifting transform. The transform coefficient of the vertex related to the lifting transform may be packed into an image by the image packer 418 (or 518) and then encoded by the video encoder 419 (or 519).

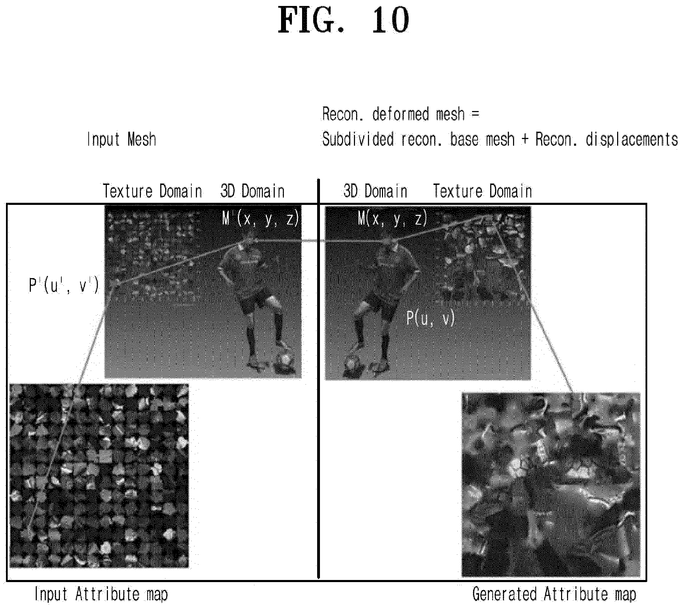

FIG. 10 illustrates an attribute transfer process in a V-MESH compression method according to embodiments.

According to embodiments, FIG. 10 illustrates a detailed operation of the attribute transfer 425 (or 525) in the encoding of FIGS. 6, 7, etc.

The encoding according to the embodiments includes attribute map encoding. According to embodiments, the attribute map encoding may be performed by the video encoder 428 of FIG. 6 or the video encoder 528 of FIG. 7.

According to embodiments, in the present disclosure, the encoder compresses information about the input mesh through base mesh encoding (i.e., intra-encoding), motion field encoding (i.e., inter-encoding), and displacement encoding. The input mesh compressed in the encoding process is reconstructed through base mesh decoding (intra frame), motion field decoding (inter frame), and displacement video decoding, and the reconstructed deformed mesh (hereinafter referred to as Recon. deformed mesh), which is the result of the reconstruction, is used to compress the input attribute map, as shown in FIGS. 6 and 7. The Recon. deformed mesh has position information about vertices, texture coordinates, and corresponding connectivity information, but does not have color information corresponding to the texture coordinates. Therefore, as shown in FIG. 10, in the V-Mesh compression method, a new attribute map having color information corresponding to the texture coordinates of the recon. deformed mesh is re-generated through the attribute transfer process of the attribute transfer 425 (or 525).

According to embodiments, the attribute transfer 425 (or 525) first checks, for every point P(u, v) in the 2D texture domain, whether the corresponding vertex is within a texture triangle of the Recon. deformed mesh. When the corresponding vertex is in the texture triangle T, the attribute transfer calculates the barycentric coordinates (α, β, γ) of P(u, v) according to the triangle T. Then, it calculates the 3D coordinates M(x, y, z) of P(u, v) based on the 3D vertex positions of the triangle T and (α, β, γ). The vertex coordinates M'(x', y', z') that corresponds to the closest position to the calculated M(x, y, z) and a triangle T' containing this vertex are searched for in the input mesh domain. Then, the barycentric coordinates (α', β', γ') of M'(x', y', z') in the triangle T' are calculated. The texture coordinates (u', v') are calculated based on the texture coordinates corresponding to the three vertices of triangle T' and (α', β', γ'), and the color information corresponding to the coordinates are searched for in the input attribute map. The color information found in this way is then assigned to the (u, v) pixel position in the new input attribute map. If P(u, v) does not belong to any triangle, the pixel at the position in the new input attribute map be filled with a color value using a padding algorithm, such as the push-pull algorithm of the push-pull padding 426 (or 526).

The new attribute map generated by the attribute transfer 425 (or 525) is bundled into GoFs to construct an attribute map video, which is compressed using a video codec of the video encoder 428 (or 528).

A reference relationship between the input mesh, the input attribute map, the reconstructed deformed mesh, and the reconstructed attribute map is shown may be seen from FIG. 10.

The decoding process of FIG. 1 may perform the reverse of the encoding process of FIG. 1. Specifically, the decoding process is performed as disclosed below.

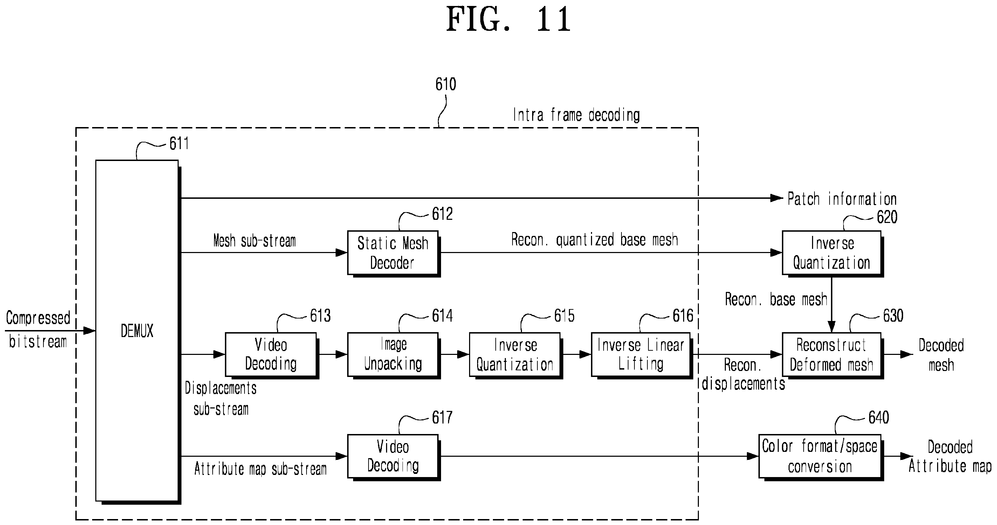

FIG. 11 shows the intra-frame decoding (or intra decoding) process of the V-Mesh technology according to embodiments.

FIG. 11 illustrates the configuration and operation of the mesh video decoder 113 of the reception apparatus of FIG. 1. Additionally, FIG. 11 illustrates that the mesh data may be reconstructed by performing a reverse process to the intra-frame encoding process of FIG. 6. Each component for the intra-frame decoding process of FIG. 11 corresponds to hardware, software, and/or a combination thereof.

First, the bitstream (i.e., compressed bitstream) received and input to the demultiplexer 611 of the intra-frame decoder 610 may be separated into a mesh sub-stream, a displacement sub-stream, an attribute map sub-stream, and a sub-stream containing patch information about the mesh, such as V-PCC/V3C. The term V-PCC (Video-based Point Cloud Compression) used in the present disclosure may have the same meaning as V3C (Visual Volumetric Video-based Coding). The two terms may be used interchangeably. Accordingly, in the present disclosure, the term V-PCC may be interpreted as V3C.

According to embodiments, the mesh sub-stream may be input to and decoded by a static mesh decoder 612, the displacement sub-stream may be input to and decoded by the video decoder 613, and the attribute map sub-stream may be input to and decoded by the video decoder 617.

According to embodiments, the mesh sub-stream may be decoded through the decoder 612 of a static mesh codec used in the encoding such as, for example, Google Draco, to reconstruct connectivity information, vertex geometry information, vertex texture coordinates, and the like related to the result of the decoding, a recon. quantized base mesh, e.g., reconstructed base mesh.

According to embodiments, the displacement sub-stream may be decoded into a displacement video through the decoder 613 of the video compression codec used in the encoding. Then, image unpacking is performed by the image unpacker 614, inverse quantization is performed by the inverse quantizer 615, and inverse transform is performed by the inverse linear lifting unit 616 to reconstruct the displacement information about each vertex (i.e., Recon. displacements).

According to embodiments, the base mesh reconstructed by the static mesh decoder 612 is inversely quantized by the inverse quantizer 620 and output to the mesh reconstructor 630. The mesh reconstructor 630 reconstructs a reconstructed deformed mesh (i.e., a decoded mesh) based on the reconstructed displacements output from the inverse linear lifting unit 616 and the reconstructed base mesh output from the inverse quantizer 620. In other words, the inversely quantized reconstructed base mesh is combined with the reconstructed displacement information to generate a final decoded mesh. In the present disclosure, the final decoded mesh is referred to as a reconstructed deformed mesh.

According to embodiments, the attribute map sub-stream is decoded by the decoder 617 corresponding to the video compression codec used in the encoding, and then a final attribute map (i.e., a decoded attribute map) is reconstructed by the color transformer 640 through color format transform, color space conversion, and the like.

According to embodiments, the reconstructed decoded mesh and decoded attribute map may be utilized at the receiving side as final mesh data that may be utilized by a user.

Referring to FIG. 11, the received compressed bitstream includes patch information, a mesh sub-stream, a displacement sub-stream, and an attribute map sub-stream. The term sub-stream is interpreted as referring to a partial bitstream included in the bitstream. The bitstream contains patch information (data), mesh information (data), displacement information (data), and attribute map information (data).

As described above, the decoder of FIG. 11 performs intra-frame decoding as follows. The static mesh decoder 612 decodes the mesh sub-stream to generate a reconstructed quantized base mesh, and the inverse quantizer 620 applies the quantization parameters of the quantizer in reverse to generate a reconstructed base mesh. The video decoder 613 decodes the displacement sub-stream, the image unpacker 614 unpacks the image of the decoded displacement video, and the inverse quantizer 615 inversely quantizes the quantized image. The inverse linear lifting unit 616 applies a lifting transform in the reverse process of the encoder to generate a reconstructed displacement. The mesh reconstructor 630 generates a reconstructed deformed mesh based on the reconstructed base mesh and the reconstructed displacement. The video decoder 617 decodes the attribute map sub-stream, and the color transformer 640 transforms the color format and/or space of the decoded attribute map to generate a decoded attribute map.

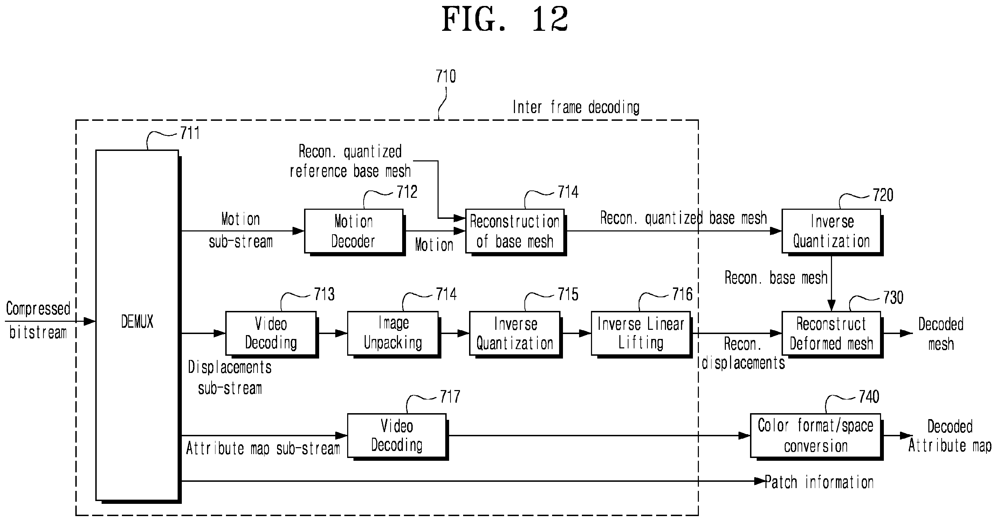

FIG. 12 illustrates an inter-frame decoding (or inter-decoding) process of V-Mesh technology.

FIG. 12 illustrates the configuration and operation of the mesh video decoder 113 of the reception apparatus of FIG. 1. In FIG. 12, mesh data may be reconstructed by performing a reverse process to the inter-frame encoding process of FIG. 7. Each component for the intra-frame decoding process of FIG. 12 corresponds to hardware, software, and/or a combination thereof.

First, the bitstream received and input to the demultiplexer 711 of the intra-frame decoder 710 may be separated into a motion sub-stream (also referred to as a motion vector sub-stream), a displacement sub-stream, an attribute map sub-stream, and a sub-stream containing patch information about the mesh, such as V3C/V-PCC.

According to embodiments, the motion sub-stream may be input to and decoded by the motion decoder 712, the displacement sub-stream may be input to and decoded by the video decoder 713, and the attribute map sub-stream may be input to and decoded by the video decoder 717.

According to embodiments, the motion sub-stream is decoded by the motion decoder 712 through entropy decoding and inverse prediction to reconstruct motion information (also referred to as motion vector information). The base mesh reconstructor 718 combines the reconstructed motion information with a pre-reconstructed and stored reference base mesh to generate a reconstructed quantized base mesh for the current frame. The inverse quantizer 720 applies inverse quantization to the reconstructed quantized base mesh to generate a reconstructed base mesh. The video decoder 713 decodes the displacement sub-stream, the image unpacker 714 unpacks the image of the decoded displacement video, and the inverse quantizer 715 inversely quantizes the quantized image. The inverse linear lifting unit 716 applies a lifting transform in the reverse process of the encoder to generate a reconstructed displacement. The mesh reconstructor 730 generates a reconstructed deformed mesh, i.e., a final decoded mesh, based on the reconstructed base mesh and the reconstructed displacement.

According to embodiments, the video decoder 717 decodes the attribute map sub-stream in the same way as the intra-decoding, and the color transformer 740 transforms the color format and/or space of the decoded attribute map to generate a decoded attribute map. The decoded mesh and decoded attribute map may be utilized at the receiving side as the final mesh data that may be utilized by the user.

Referring to FIG. 12, the bitstream contains motion information (also referred to as motion vectors), displacements, and an attribute map. The process of FIG. 12 further includes decoding the inter-frame motion information because inter-frame decoding is performed. A reconstructed base mesh is generated by decoding the motion information and generating a reconstructed quantized base mesh for the motion information based on the reference base mesh. For the operations in FIG. 12 that are the same as those in FIG. 11, refer to the description of FIG. 11.

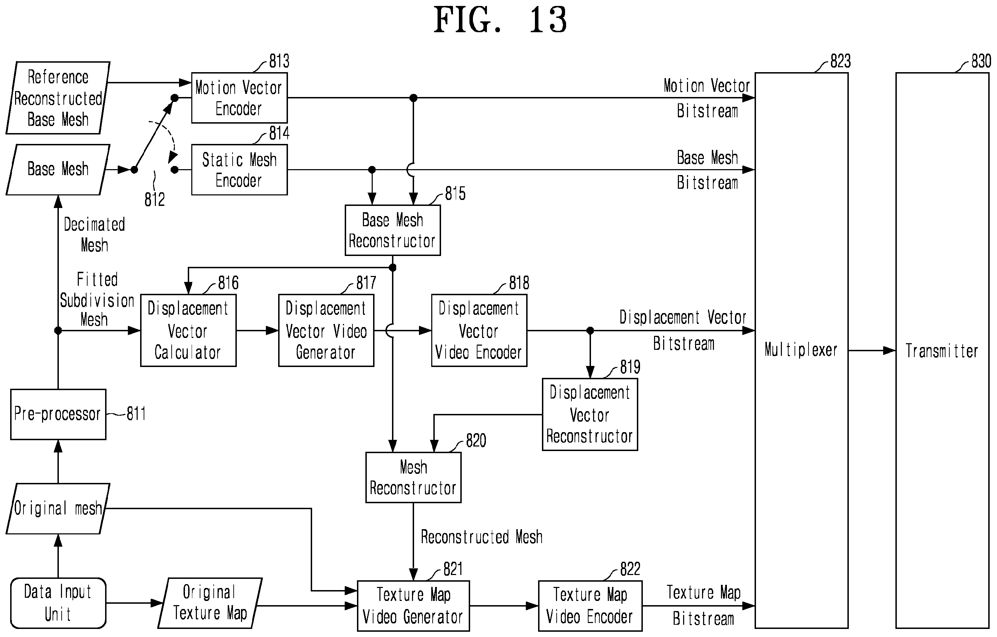

FIG. 13 illustrates a mesh data transmission apparatus according to embodiments.

FIG. 13 corresponds to the transmission apparatus 100 or mesh video encoder 102 of FIG. 1, the encoder (pre-processor and encoder) of FIG. 2, 6, or 7, and/or the corresponding transmission encoding device. Each component of FIG. 13 corresponds to hardware, software, a processor, and/or a combination thereof.

The process of operations at the transmitting end for compressing and transmitting dynamic mesh data using a V-Mesh compression technique may be configured as shown in FIG. 13. The transmission apparatus of FIG. 13 may perform intra-frame encoding (also referred to as intra-encoding or intra-picture encoding) and/or inter-frame encoding (also referred to as inter-encoding or inter-picture encoding).

The pre-processor 811 receives the original mesh and generates a decimated mesh (or base mesh) and a fitted subdivided (or subdivision) mesh. The decimation may be performed based on a target number of vertices or a target number of polygons constituting the mesh. Parameterization may be performed on the decimated mesh to generate texture coordinates and texture connectivity information per vertex. For example, the parameterization is a process of mapping a 3D curved surface into a texture domain for the decimated mesh. When the parameterization is performed using the UVAtlas tool, mapping information indicating where each vertex of the decimated mesh may be mapped to on the 2D image is generated. The mapping information is expressed and stored as texture coordinates, and the final base mesh is generated through this process. The mesh information may be quantized from a floating-point form to a fixed-point form. The result is the base mesh, which may be output to a motion vector encoder 813 or a static mesh encoder 814 through a switching unit 812. The pre-processor 811 may perform a mesh subdivision on the base mesh to generate additional vertices. Depending on the subdivision method, vertex connectivity information including the additional vertices, texture coordinates, and connectivity information about the texture coordinates may be generated. The pre-processor 811 may generate a fitted subdivided mesh by adjusting vertex positions such that the subdivided mesh becomes similar to the original mesh.

According to embodiments, when inter-frame encoding (inter-encoding) is performed on the mesh frame, the base mesh is output to the motion vector encoder 813 through the switching unit 812. When intra-frame encoding (intra-encoding) is performed on the mesh frame, the base mesh is output to the static mesh encoder 814 through the switching unit 812. The motion vector encoder 813 may be referred to as a motion encoder.

For example, when intra-encoding (intra-frame encoding) is performed on the mesh frame, the base mesh may be compressed through the static mesh encoder 814. In this case, the connectivity information, vertex geometry information, vertex texture information, normal information, and the like related to the base mesh may be encoded. The base mesh bitstream generated through the encoding is transmitted to the multiplexer 823.

As another example, when inter-encoding (inter-frame encoding) is performed on the mesh frame, the motion vector encoder 813 may receive as input a base mesh and a reference reconstructed base mesh (or a reconstructed quantized reference base mesh), compute a motion vector between the two meshes, and encode the value thereof. Further, the motion vector encoder 813 may perform connectivity information-based prediction using the previously encoded/decoded motion vector as a predictor, and encode a residual motion vector, which is obtained by subtracting the predicted motion vector from the current motion vector. The motion vector bitstream generated by the encoding is transmitted to the multiplexer 823.

The base mesh reconstructor 815 may receive the base mesh encoded by the static mesh encoder 814 or the motion vector encoded by the motion vector encoder 813, and generate a reconstructed base mesh. For example, the base mesh reconstructor 815 may perform static mesh decoding on the base mesh encoded by the static mesh encoder 814 to reconstruct the base mesh. In this case, quantization may be applied before the static mesh decoding, and inverse quantization may be applied after the static mesh decoding. In another example, the base mesh reconstructor 815 may reconstruct the base mesh based on the reconstructed quantized reference base mesh and the motion vector encoded by the motion vector encoder 813. The reconstructed base mesh is output to the displacement calculator (or displacement vector calculator) 816 and the mesh reconstructor 820.

The displacement calculator 816 may perform mesh subdivision on the reconstructed base mesh. The displacement calculator 816 may calculate a displacement vector, which is the value of the difference in vertex positions between the subdivided reconstructed base mesh and the fitted subdivision (or subdivided) mesh generated by the pre-processor 811. In this case, displacement vectors as many as vertices in the subdivided mesh may be calculated. The displacement calculator 816 may transform the displacement vectors calculated in the 3D Cartesian coordinate system to a local coordinate system based on the normal vector of each vertex.

The displacement vector video generator 817 may include a linear lifting part, a quantizer, and an image packer. That is, in displacement vector video generator 817, the linear lifting unit may transform the displacement vectors for effective encoding. According to embodiments, the transform may be lifting transform, wavelet transform, or the like. In addition, the quantizer may perform quantization on the transformed displacement vector values, i.e., the transform coefficients. In this case, different quantization parameters may be applied to the axes of the transform coefficients, respectively. The quantization parameters may be derived by an agreement between the encoder/decoder. After transform and quantization, the displacement vector information may be packed into a 2D image by the image packer. The displacement vector video generator 817 may generate a displacement vector video by grouping the packed 2D images for each frame. A displacement vector video may be generated for each group of frames (GoF) of the input mesh.

The displacement vector video encoder 818 may encode the generated displacement vector video using a video compression codec. The generated displacement vector video bitstream is transmitted to the multiplexer 823.

The displacement vector reconstructor 819 may include a video decoder, an image unpacker, an inverse quantizer, and an inverse linear lifting part. That is, in the displacement vector reconstructor 819, the encoded displacement vector is decoded by the video decoder, image unpacking is performed by the image unpacker, inverse quantization is performed by the inverse quantizer, and inverse transform is performed by the inverse linear lifting unit to reconstruct displacement vectors. The reconstructed displacement vectors are output to the mesh reconstructor 820. The mesh reconstructor 820 reconstructs a deformed mesh based on the base mesh reconstructed by the base mesh reconstructor 815 and the displacement vectors reconstructed by the displacement vector reconstructor 819. The reconstructed mesh (also referred to as the reconstructed deformed mesh) has reconstructed vertices, inter-vertex connectivity information, texture coordinates, and inter-texture coordinate connectivity information.

The texture map video generator 821 may re-generate a texture map based on the texture map (or attribute map) of the original mesh and the reconstructed deformed mesh output from the mesh reconstructor 820. According to embodiments, the texture map video generator 821 may assign the vertex-by-vertex color information in the texture map of the original mesh to the texture coordinates of the reconstructed deformed mesh. According to embodiments, the texture map video generator 821 may generate a texture map video by grouping the frame-level re-generated texture maps into GoFs.

The generated texture map video may be encoded by the texture map video encoder 822 using a video compression codec. A texture map video bitstream generated through the encoding is transmitted to the multiplexer 823.

The multiplexer 823 multiplexes the motion vector bitstream (in the case of, for example, inter-encoding), the base mesh bitstream (in the case of, for example, intra-encoding), the displacement vector bitstream, and the texture map bitstream into a single bitstream. The single bitstream may be transmitted to the receiving side through the transmitter 824. Alternatively, for the motion vector bitstream, the base mesh bitstream, the displacement vector bitstream, and the texture map bitstream, a file with one or more track data may be generated or the bitstreams may be encapsulated into segments and transmitted to the receiving side through the transmitter 824.

Referring to FIG. 13, the transmitter (encoder) may encode the mesh in an intra-frame or inter-frame manner. According to intra-encoding, the transmission apparatus may generate a base mesh, displacement vectors (or displacements), and a texture map (or attribute map). According to inter-encoding, the transmission apparatus may generate a motion vector (or motion), displacement vectors (or displacements), and a texture map (or attribute map). The texture map acquired from the data input unit is generated and encoded based on the reconstructed mesh. The displacements are generated and encoded based on the differences in vertex positions between the base mesh and the segmented (or subdivided) mesh. More specifically, the displacement is a difference in position between the fitted subdivided mesh and the subdivided reconstructed base mesh, i.e., the difference in vertex position between the two meshes. The base mesh is generated by decimating the original mesh through pre-processing and encoding the decimated mesh. For the motion, a motion vector is generated for the mesh in the current frame based on the reference base mesh in the previous frame.

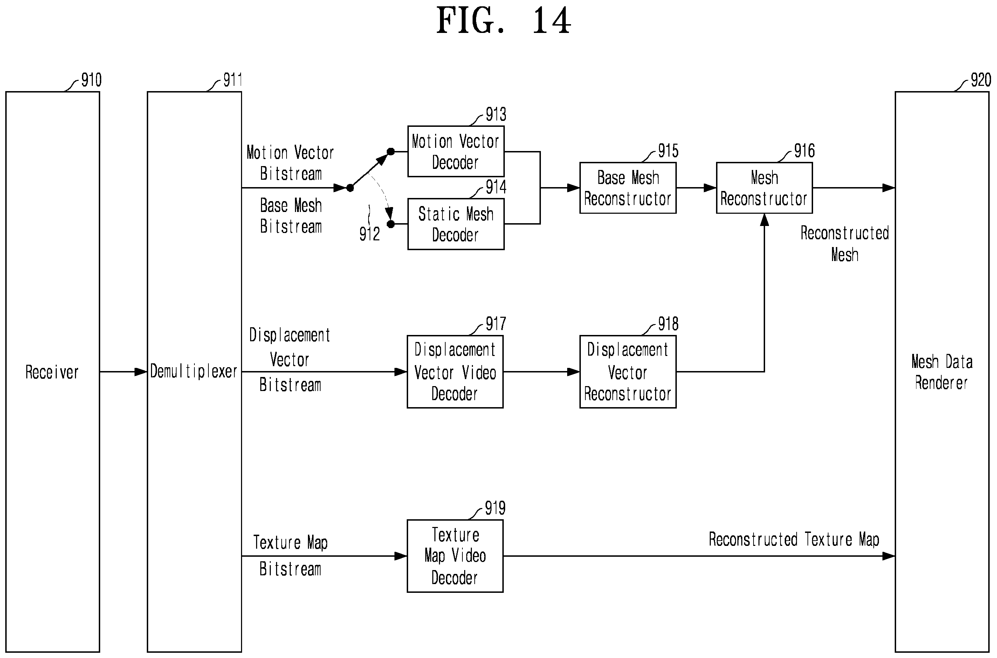

FIG. 14 illustrates a mesh data reception apparatus according to embodiments.

FIG. 14 corresponds to the reception apparatus 110 or mesh video decoder 113 of FIG. 1, the decoder of FIG. 11 or 12, and/or a corresponding reception decoding device. Each component of FIG. 14 corresponds to hardware, software, a processor, and/or a combination thereof. The reception (decoding) operation of FIG. 14 may follow a reverse process to the corresponding process of the transmission (encoding) operation of FIG. 13.

The bitstream of mesh data received by the receiver 910 is subjected to file/segment decapsulation and then demultiplexed by the demultiplexer 911 into a compressed motion vector bitstream (e.g., inter-decoding) or base mesh bitstream (e.g., intra-decoding), a displacement vector bitstream, and a texture map bitstream. For example, when the current mesh is inter-frame encoded (i.e., inter-encoded), the motion vector bitstream is received, demultiplexed, and then output to the motion vector decoder 913 through the switching unit 912. In another example, when the current mesh is intra-frame encoded (i.e., intra-encoded), the base mesh bitstream is received, demultiplexed, and output to the static mesh decoder 914 through the switching unit 912. Here, the motion vector decoder 913 may be referred to as a motion decoder.

According to embodiments, in the case where inter-frame encoding is applied to the current mesh based on the frame header information, the motion vector decoder 913 may decode the motion vector bitstream. According to embodiments, the motion vector decoder 913 may use the previously decoded motion vector as a predictor and add the same to the residual motion vector decoded from the bitstream to reconstruct the final motion vector.

According to embodiments, in the case where intra-frame encoding is applied to the current mesh based on the frame header information, the static mesh decoder 914 may decode the base mesh bitstream to reconstruct connectivity information, vertex geometry information, texture coordinates, normal information, and the like related to the base mesh.

According to embodiments, the base mesh reconstructor 915 may reconstruct the current base mesh based on the decoded motion vectors or the decoded base mesh. For example, in the case where inter-frame encoding is applied to the current mesh, the base mesh reconstructor 915 may add the decoded motion vectors to the reference base mesh and perform inverse quantization to generate a reconstructed base mesh. In another example, in the case where intra-frame encoding is applied to the current mesh, the base mesh reconstructor 915 may perform inverse quantization on the base mesh decoded by the static mesh decoder 914 to generate a reconstructed base mesh.

According to embodiments, the displacement vector video decoder 917 may decode the displacement vector bitstream as a video bitstream using a video codec.

According to embodiments, the displacement vector reconstructor 918 extracts displacement vector transform coefficients from the decoded displacement vector video, and applies inverse quantization and inverse transform to the extracted displacement vector transform coefficients to reconstruct displacement vectors. To this end, the displacement vector reconstructor 918 may include an image unpacker, an inverse quantizer, and an inverse linear lifting part. If the reconstructed displacement vectors are values in a local coordinate system, inverse transform to the Cartesian coordinate system may be performed.

The mesh reconstructor 916 may subdivide the reconstructed base mesh to generate additional vertices. Through the subdivision, vertex connectivity information including the additional vertices, texture coordinates, and connectivity information about the texture coordinates may be generated. In this case, the mesh reconstructor 916 may combine the subdivided reconstructed base mesh with the reconstructed displacement vectors to generate a final reconstructed mesh (also referred to as a reconstructed deformed mesh).

According to embodiments, the texture map video decoder 919 may decode the texture map bitstream as a video bitstream using a video codec to reconstruct a texture map. The reconstructed texture map has color information about each vertex in the reconstructed mesh, and the texture coordinates of each vertex may be used to obtain the color value of the vertex from the texture map.

According to embodiments, the mesh reconstructed from the mesh reconstructor 916 and the texture map reconstructed from the texture map video decoder 919 are presented to the user through a rendering process in the mesh data renderer 920.

Referring to FIG. 14, the reception apparatus (decoder) may decode the mesh in an intra-frame or inter-frame manner. According to intra-decoding, the reception apparatus may receive a base mesh, displacement vectors (or displacements), and a texture map (or attribute map), and render mesh data based on the reconstructed mesh and reconstructed texture map. According to inter-decoding, the reception apparatus may receive a motion vector (or motion), the displacement vectors (or displacements), a texture map (or attribute map), and render mesh data based on the reconstructed mesh and the reconstructed texture map.

A mesh data transmission apparatus and method according to embodiments may pre-process mesh data, encode the preprocessed mesh data, and transmit a bitstream containing the encoded mesh data. A point mesh data reception apparatus and method according to embodiments may receive a bitstream containing mesh data and decode the mesh data. The mesh data transmission/reception method/apparatus according to embodiments may be referred to as a method/apparatus according to embodiments. The mesh data transmission/reception method/apparatus may also be referred to as a 3D data transmission/reception method/apparatus or point cloud data transmission/reception method/apparatus.

In the present disclosure, geometry information (or geometry or geometry data) refers to one of the elements that constitute a mesh, including vertices (or points), edges, and polygons. Here, a vertex defines a position in 3D space, an edge represents connectivity information between vertices, and a polygon, formed by a combination of edges and vertices, defines the surface of the mesh. In other words, each vertex that constitutes the mesh represents a position in 3D space, expressed by, for example, X, Y, and Z coordinates. The polygon may be a triangle or a rectangle. Therefore, geometry forms the skeleton of a 3D model, defining the shape of the model, which is visually represented when rendered.

According to embodiments, the apparatus and method may process mesh data considering partial access (also referred to as partial decoding). More specifically, the present disclosure describes a method for efficiently supporting selective decoding of part of the data when necessary due to factors such as receiver performance or transmission speed during transmission and reception of mesh data.

That is, in the video-based dynamic mesh coding (V-DMC) technology, which is a method of compressing 3D dynamic mesh data using a conventional 2D video codec, the transmitter is designed to compress and transmit the entire input mesh data (i.e., the entire mesh content), and the receiver is designed to decode the entire bitstream to reconstruct the entire mesh region. In particular, current V-DMC technology does not employ any coding method or signaling for partial access. However, when a user utilizes content on a device, application, or software level, there may be cases where only a specific region is needed instead of the entire content. In such cases, it is more efficient in terms of time and resource utilization for the receiving side to receive information about the desired region, extract only the bitstream corresponding to the region, and perform decoding and reconstruction for the region.

Therefore, the present disclosure proposes an apparatus and method to support partial access (or partial reconstruction) and reconstruction of mesh data. In particular, the present disclosure proposes an encoding apparatus and method and a decoding apparatus and method that support partial access, allowing only specific regions of mesh data (or mesh content) to be selectively decoded and reconstructed in a V-DMC manner on the receiving side.

To this end, in the present disclosure, a partial unit for partial region access is defined, and pre-processing (e.g., atlas parameterization, base mesh generation) and compression of the mesh data are performed based on the partial unit. Thereafter, the present disclosure describes encoding, decoding, and signaling methods for base mesh data (including motion fields), among the elements that constitute the compressed bitstream of mesh data, namely, base mesh (including motion fields), displacement, and an attribute map (also referred to as a texture map).

In other words, to allow the receiving side (e.g., decoder) to independently decode and reconstruct only a specific mesh data region specified by the user, the present disclosure describes methods for generating and signaling a mesh set in a partial unit, and methods for atlas parameterization, base mesh generation, encoding, decoding, and signaling based on the mesh set in the partial unit. Also, the operations of the transmission and reception apparatuses applying these methods are described. In the present disclosure, the partial unit is referred to as a sub-group or sub-mesh.

As such, the present disclosure implements partial access (or partial decoding) and reconstruction functions to enable reconstruction and utilization of specific regions of a dynamic mesh.

Accordingly, the present disclosure describes the definition, generation method, and signaling method for sub-groups in a mesh, a sub-group-based atlas parameterization method, a sub-group-based base mesh generation method, sub-group-based base mesh encoding and decoding methods, a new bitstream structure and signaling method, sub-group-based motion field encoding and decoding methods, and a new bitstream structure and/or signaling method for sub-group-based extraction of displacement information.

First, a method of encoding and signaling mesh data on a per sub-group basis by a mesh data transmission apparatus/method will be described.

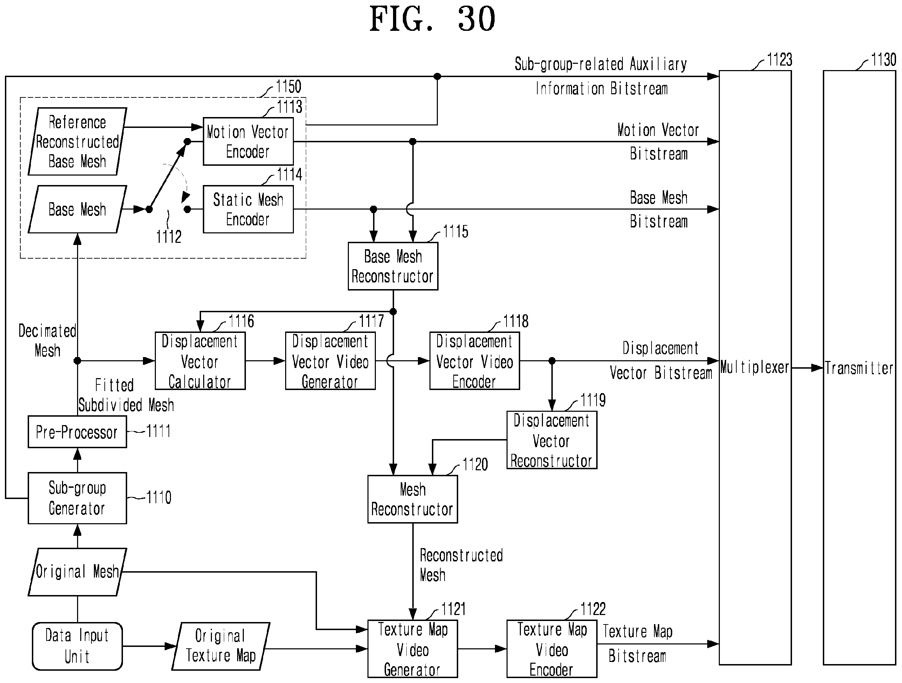

The mesh data transmission apparatus according to the embodiments may be one of the transmission apparatus in FIG. 1, the transmission apparatus in FIG. 2, the transmission apparatus in FIG. 6, the transmission apparatus in FIG. 7, the transmission apparatus in FIG. 13, or the transmission apparatus in FIG. 30.

FIG. 30 is a block diagram illustrating another example of a transmission apparatus according to embodiments.

The transmission apparatus in FIG. 30 is configured to divide the original mesh into sub-groups and perform encoding on a per sub-group basis. FIG. 30 corresponds to the transmission apparatus 100 in FIG. 1, the transmission apparatus in FIG. 2, 6, 7, or 13, and/or a transmission apparatus corresponding thereto.

In particular, the transmission apparatus in FIG. 30 is configured by adding a sub-group generator 1110 and a sub-group-related auxiliary information bitstream to the transmission apparatus in FIG. 13. Therefore, for details not described in relation to FIG. 30, refer to the description of the transmission apparatus in FIG. 13. The execution order of the blocks in the transmission apparatus of FIG. 30 may be changed, some blocks may be omitted, and some blocks may be newly added. Each component in FIG. 30 corresponds to hardware, software, a processor, and/or a combination thereof.

### a) Method of defining sub-groups of a mesh and generating sub-groups

Hereinafter, a method of defining sub-groups of a mesh and generating sub-groups is described.

The present disclosure defines a sub-group as a partial unit for partial region access to a mesh. In the present disclosure, a sub-group may also be referred to as a sub-mesh or sub-block. In the present disclosure, a single sub-group may be a unit including the entire mesh or a unit including only a partial region of the mesh, depending on user settings. Here, a partial region of the mesh may correspond to part of an object, part of a bounding box, or a part within a mesh frame.

In the present disclosure, the entire mesh may be defined as a single frame or as one or more objects.

That is, the mesh data (or mesh frame or mesh content) may include one or more mesh objects. Each mesh object (hereafter simply referred to as an object) occupies a specific region in 3D space. A bounding box represents the minimum bounding box that encloses (or surrounds) a specific object. This box is typically a rectangular cuboid in 3D space and is adjusted to the minimum size that completely contains the object.

For example, when a single object constitutes the entire mesh, the bounding box may enclose the entire mesh. In another example, when multiple objects constitute the entire mesh, a bounding box may be generated for each object. That is, a bounding box may enclose the entire mesh or may enclose each object individually.

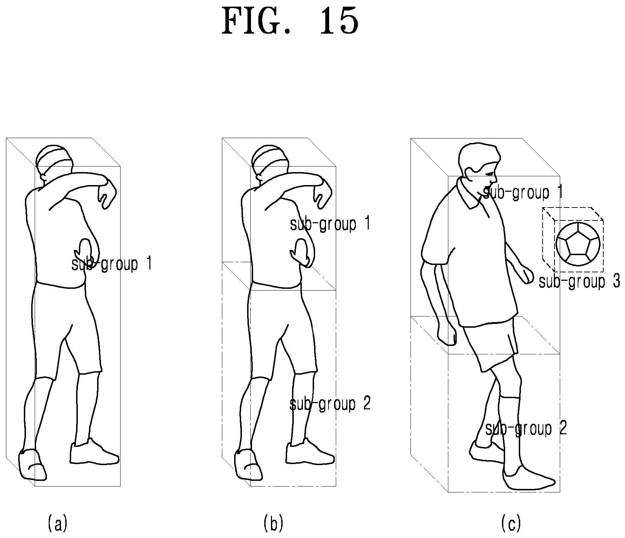

FIGS. 15(a) to 15(c) are diagrams illustrating examples of sub-group generation according to embodiments.

FIG. 15(a) illustrates an example where a single bounding box is composed of a single sub-group, and FIG. 15(b) illustrates an example where a single bounding box is composed of two sub-groups. FIG. 15(c) illustrates an example where one bounding box is composed of two sub-groups and another bounding box is composed of one sub-group.

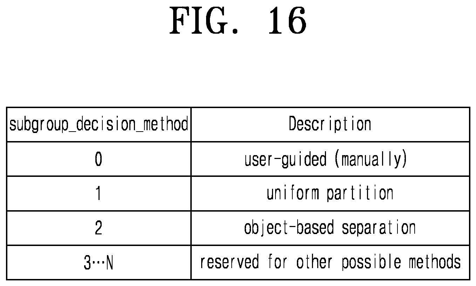

According to embodiments of the present disclosure, there may be one or more methods of generating sub-groups as disclosed below. As shown in FIG. 16, information (e.g., subgroup_decision_method) for identifying the sub-group generation method applied to the mesh data may be signaled in signaling information (e.g., mesh_subgroup_info_set()). The signaling information may further include information for identifying the number of sub-groups (e.g., num _total_subgroups).

According to embodiments, the signaling information (e.g., mesh_subgroup_info_set()) may be referred to as sub-group-related information or sub-group information. Alternatively, the information included in the signaling information (e.g., mesh_subgroup_info_set()) may be referred to as sub-group-related information or sub-group information.

FIG. 16 illustrates an example of information (e.g., subgroup_decision_method) for identifying a sub-group generation method according to embodiments.

In FIG. 16, among the values of subgroup_decision_method, 0 may indicate user-guided (manual), 1 may indicate uniform partition, and 2 may indicate object-based separation. Also, 3 or greater values of subgroup_decision_method may indicate that one or more of user-guided (manual), uniform partition, or object-based separation are combined to generate sub-groups, or may be reserved for future use.

A first embodiment of the sub-group generation method according to the present disclosure corresponds to subgroup_decision_method set to 0. That is, in encoding, the mesh object is partitioned into K parts (where K is greater than or equal to 1) based on 3D (x, y, z) coordinates specified by the user, and the partitioned parts are designated as sub-group 0 to sub-group K-1, respectively. In this case, region information for each user-specified sub-group (e.g., subgroup_boundingbox_position_x, subgroup_boundingbox_position_y, subgroup_boundingbox_position_z, subgroup_boundingbox_size_x_minus1, subgroup_boundingbox_size_y_minus1, subgroup_boundingbox_size_z_minus1) may be signaled and transmitted in the signaling information (e.g., mesh_subgroup_info_set()).

A second embodiment of the sub-group generation method according to the present disclosure corresponds to subgroup_decision_method set to 1. That is, in encoding, a bounding box enclosing the mesh object is uniformly partitioned into K rectangular cuboids based on the number of sub-groups specified by the user. The partitioned parts are designated as sub-group 0 to sub-group K-1, respectively. In this case, partition information (e.g., num_subgroup_x_minus1, num_subgroup_y_minus1, num_subgroup_z_minus1) for identifying the number of sub-groups into which the bounding box is partitioned may be signaled and transmitted in the signaling information (e.g., mesh_subgroup_info_set()).

A third embodiment of the sub-group generation method according to the present disclosure corresponds to subgroup_decision_method set to 2. For example, when there are K objects in the content, the respective distinct or independent and unconnected objects are designated as sub-group 0 to sub-group K-1.

A fourth embodiment of the sub-group generation method according to the present disclosure is a method of generating one or more sub-groups by combining one or more of the above methods. In this case, information according to the combined methods may be added to the signaling information (e.g., mesh_subgroup_info_set()) and transmitted.

FIGS. 15(a) and 15(b) may correspond to the first or second embodiment, and FIG. 15(c) may correspond to the fourth embodiment, which is a combination of the second and third embodiments.

According to embodiments, the sub-group generator 1110 may generate sub-groups in one embodiment of the present disclosure. That is, the sub-group generator 1110 divides the original mesh into sub-groups based on at least one of the first to fourth embodiments.

In the present disclosure, sub-groups may be configured by the user or system for each frame. Alternatively, the user (or system) may configure new sub-groups every certain number of frames. In this case, the pre-configured sub-groups are maintained for each frame until new sub-groups are configured. Alternatively, when an object included in each sub-group moves out of the corresponding region due to motion, the user (or system) may reconfigure the sub-groups. Then, the configured sub-groups are maintained for each frame until new sub-groups are configured.

According to embodiments of the present disclosure, sub-group-related information (also referred to as sub-group information) may be signaled for the entire sequence, at constant frame intervals, every frame, or whenever sub-groups are updated.

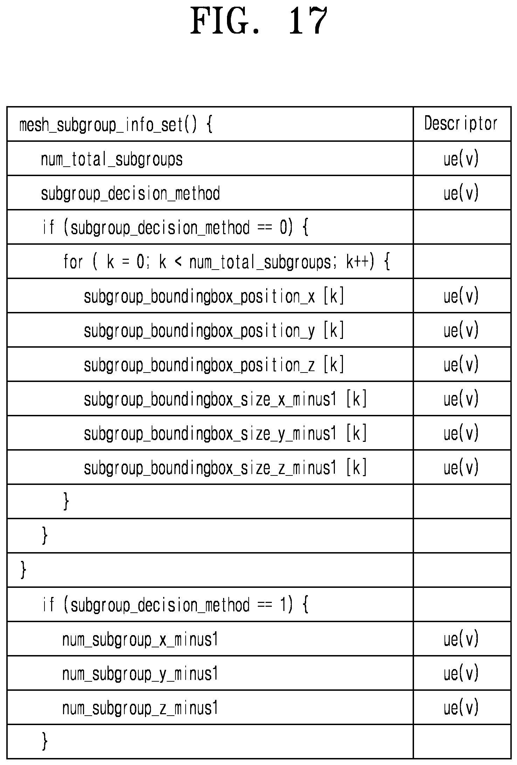

FIG. 17 illustrates an example syntax structure of signaling information (e.g., mesh_subgroup_info_set()) including the sub-group generation method of FIG. 16.

In FIG. 17, the num_total_subgroups field indicates the number of sub-groups. For example, it may indicate the total number of sub-groups generated by user settings. The value of this num_total_subgroups field is based on frames and may change per sequence/frame/fixed number of frames, or whenever the number changes.

The subgroup_decision_method field indicates the sub-group generation method used in the present disclosure. For example, it may indicate the sub-group generation method used by the user. In the present disclosure, it is defined as in FIG. 16, and the corresponding value is signaled according to the generation method.

In the present disclosure, when subgroup_decision_method is set to 0, namely, indicates user-guided, the signaling information (e.g., mesh_subgroup_info_set()) may include a loop that iterates as many times as the value of num_total_subgroups. In this case, in one embodiment, k may be initialized to 0 and be incremented by 1 with each iteration of the loop, which may iterate until k reaches the value of the num_total_subgroups field. This loop may include a subgroup_boundingbox_position_x[k] field, a subgroup_boundingbox_position_y[k] field, a subgroup _boundingbox_position_ z[k] field, a subgroup_boundingbox_size_x_minus1[k] field, a subgroup_boundingbox_size_y_minusl[k] field, and a subgroup_boundingbox_size_z_minus 1[k] field.

The subgroup_boundingbox_position_x [k] field indicates the x-coordinate of the starting point in 3D space of the bounding box that encloses the mesh region of the k-th sub-group.

The subgroup_boundingbox_position_y [k] field indicates the y-coordinate of the starting point in 3D space of the bounding box that encloses the mesh region of the k-th sub-group.

The subgroup_boundingbox_position_z [k] field indicates the z-coordinate of the starting point in 3D space of the bounding box that encloses the mesh region of the k-th sub-group.
subgroup_boundingbox_size_x_minus1 [k] plus 1 indicates the size of the bounding box that encloses the mesh region of the k-th sub-group, along the x-axis direction.
subgroup_boundingbox_size_y_minus1 [k] plus 1 indicates the size of the bounding box that encloses the mesh region of the k-th sub-group, along the y-axis direction.
subgroup_boundingbox_size_z_minus1 [k] plus 1 indicates the size of the bounding box that encloses the mesh region of the k-th sub-group, along the z-axis direction.

When subgroup_decision_method is set to 1, namely, indicates uniform partition, the signaling information (e.g., mesh_subgroup_info_set()) may further include a num_subgroup_x_minus1 field, a num_subgroup_y_minus1 field, and a num_subgroup_z_minus1 field.
num_subgroup_x_minus1 plus 1 indicates the nubmer of parts into which the bounding box enclosing the entire mesh is partitioned along the x-axis.
num_subgroup_y _minus1 plus 1 indicates the nubmer of parts into which the bounding box enclosing the entire mesh is partitioned along the y-axis.
num_subgroup_z_minus1 plus 1 indicates the number of parts into which the bounding box enclosing the entire mesh is partitioned along the z-axis.

### b) Subgroup-based atlas parameterization (pre-processing) method

Next, a method of performing atlas parameterization by a pre-processor based on sub-groups is described below.

According to embodiments, the pre-processor 1111 performs pre-processing before compressing the input mesh data. That is, the pre-processor 1111 receives the input mesh (or original mesh) for each sub-group generated by the sub-group generator 1110 and performs pre-processing.

According to embodiments of the present disclosure, the pre-processing procedure may be the same as that of the pre-processor in FIG. 3, or sub-group processing may be additionally included.

That is, the atlas parameterization method in the pre-processing procedure of FIG. 3 may be applied as described in FIG. 3, or atlas parameterization may be performed on a per sub-group basis. The latter case considers technical extensions for attribute map video compression efficiency and future support for partial access to the attribute map.

Next, the sub-group-based atlas parameterization method is described.

First, the input mesh (also referred to as the original mesh) is simplified by a mesh decimation part of the pre-processor 1111. The decimated input mesh is input to an atlas parameterization part of the pre-processor 1111. That is, the mesh decimation part may select vertices to be removed from the original mesh according to user-defined criteria, and then remove the selected vertices and triangles connected to the selected vertices.

In the present disclosure, the input mesh includes the 3D coordinates of the vertices constituting the mesh, normal information about each vertex, mapping information for mapping the mesh surface to a 2D plane, and connectivity information between the vertices constituting the surface.

According to embodiments, the atlas parameterization part configures the vertices and vertex connectivity information for each sub-group based on the vertices of the simplified mesh obtained as a result of mesh decimation. That is, based on the position values of the vertices of the decimated mesh and position information for each user-specified sub-group, the vertices corresponding to each sub-group are determined, and the determined vertices are included in the components of the corresponding sub-group together with connectivity information related thereto.

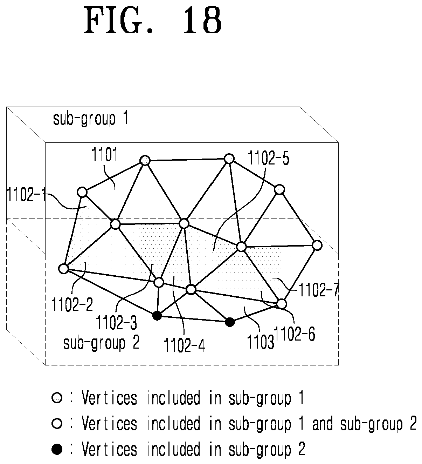

If, as shown in FIG. 18, vertices belonging to different sub-groups are connected to form a single mesh polygon (face), the connected vertices, even when they belong to different sub-groups, may be redundantly included in the sub-groups to which the connected vertices belong. That is, when polygons overlap at the boundaries of multiple different sub-groups, the vertices constituting the polygons may be included as constituent vertices of all sub-groups forming the boundary.

FIG. 18 is a diagram illustrating an example method of determining sub-groups for vertices positioned at sub-group boundaries according to embodiments.

In FIG. 18, each of the polygons 1102-1 to 1102-7 is a polygon formed by connecting vertices belonging to sub-group 1 and sub-group 2. That is, at least one of the vertices constituting each polygon is included in sub-group 1, and at least one is included in sub-group 2. For example, among the three vertices constituting polygon 1102-1, one vertex belongs to sub-group 1 and the other two vertices belong to sub-group 2. In contrast, in FIG. 18, all three vertices constituting polygon 1101 belong to sub-group 1, and all three vertices constituting polygon 1103 belong to sub-group 2.

In one embodiment of the present disclosure, all the vertices constituting polygons 1102-1 to 1102-7 may be included in both sub-group 1 and sub-group 2.

Then, for the vertices classified according to each sub-group as shown in FIG. 18, the atlas parameterization part performs atlas parameterization for each sub-group.

According to embodiments, the atlas parameterization part maps the 3D surface of the decimated mesh to the texture domain on a per-sub-group basis. Through this operation, mapping information is generated that indicates a position in a 2D image onto which each vertex of the decimated mesh for each sub-group may be mapped. In other words, mapping information is generated for each sub-group. The mapping information is expressed and stored as texture coordinates. Through this operation, a final base mesh is generated per sub-group (i.e., for each sub-group). That is, the atlas parameterization part performs parameterization for each sub-group, generating texture coordinates (UV coordinates) and texture connectivity information for each vertex of the decimated mesh.

Then, the texture coordinates (also referred to as UV coordinates) obtained as a result of the atlas parameterization are set to have different UV coordinate ranges for each sub-group such that the coordinates not overlap within one 2D image.

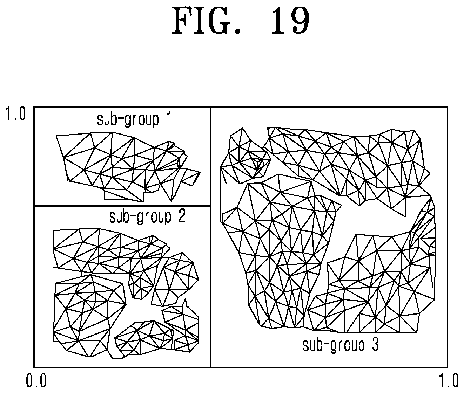

For example, as shown in FIG. 19, the UV coordinates of sub-group 1 may be set to be present within the range of 0 ≤ (u, v) < 0.03, the UV coordinates of sub-group 2 may be set to be present within the range of 0.0 ≤ u < 0.03 and 0.3 ≤ v < 1.0, and the UV coordinates of sub-group 3 may be set to be present within the range of 0.3 ≤ u < 1.0 and 0 ≤ v < 1.0. In this way, the method of arranging the UV coordinates for each sub-group within one atlas image such that they do not overlap each other may be configured by the user in the encoder based on the number of vertices in each sub-group.

FIG. 19 is a diagram illustrating an example result of sub-group-based atlas parameterization according to embodiments.

Arranging the UV coordinates of each sub-group within one atlas image such that they do not overlap each other, as shown in FIG. 19, makes the attribute information present on the image according to each sub-group when generating a new attribute map through the attribute transfer (or the texture map video generator 1121). Thereby, the texture map video encoder 1122 may improve the efficiency of temporal coding between successive attribute map frames during attribute map video compression, and may also help facilitate partial region bitstream access within the video codec.

### c) Sub-group-based base mesh generation method

Next, the sub-group-based base mesh generation method is described below. In one embodiment of the present disclosure, the atlas parameterization part of the pre-processor 1111 may generate a base mesh on a sub-group basis.

As described above, each sub-group may be defined based on the 3D vertex coordinates constituting the mesh decimated through pre-processing. The vertex coordinates of the decimated mesh present within the 3D region in which sub-groups are defined, the connectivity information between the vertex coordinates, the texture coordinates (also referred to as UV coordinates) obtained through atlas parameterization of the vertices, the connectivity information between texture coordinates, and additional attribute information become components that define the base mesh of sub-groups.

Also, as described with reference to FIG. 18, when vertices belonging to different sub-groups are connected to form a mesh polygon, the connected vertices may be redundantly included in the sub-groups to which they belong, even when they are from different sub-groups. That is, when polygons overlap at the boundaries of multiple different sub-groups, the vertices constituting the polygons may be included as constituent vertices of all the sub-groups, thereby constituting the base mesh.

### d) Sub-group-based fitting subdivision surface method

Next, a sub-group-based fitting subdivision surface method is described below. In one embodiment of the present disclosure, a fitting subdivision surface part of the pre-processor 1111 performs a subdivision operation on the base mesh based on sub-groups. That is, the base mesh generated for each sub-group is subdivided on a sub-group basis. For details of the subdivision operation, refer to the description of FIG. 4. In other words, fitting is performed such that the input mesh and the subdivided mesh become similar to each other on a sub-group basis. In the present disclosure, the mesh obtained through the fitting operation is referred to as a fitted subdivided mesh (or fitting subdivided mesh). The subdivided vertices, connectivity information thereon, and texture information are also included in the corresponding sub-group.

Based on the fitted subdivided mesh for each sub-group obtained through this process and the base mesh for each sub-group that has been previously compressed and decoded, the displacement component is calculated by the displacement vector calculator 1116. That is, the displacement component (or displacement vector) is calculated based on the fitted subdivided mesh and the base mesh that has been previously compressed and decoded (i.e., reconstructed) for the same sub-group.

According to embodiments, the displacement vector calculator 1116 may perform mesh subdivision on the reconstructed base mesh on a sub-group basis, and calculate the displacement vector, which is the difference in vertex position between the subdivided reconstructed base mesh and the fitted subdivided mesh generated on a sub-group basis by the fitting subdivision surface part of the pre-processor 1111. In this operation, as many displacement vectors as the number of vertices in the subdivided mesh may be calculated.

### e) Sub-group-based base mesh encoding method

Next, a method of encoding the base mesh based on sub-groups is described below. In one embodiment of the present disclosure, a static mesh encoder 1114 may encode the base on a sub-group basis and generate a base mesh bitstream containing the encoded base mesh.

For the method of encoding the base mesh based on sub-groups and generating a base mesh bitstream according to the present disclosure, at least one of first to third embodiments disclosed below may be applied.

The first embodiment is a method in which base meshes for sub-groups are compressed individually, and a single base mesh bitstream is generated and transmitted.

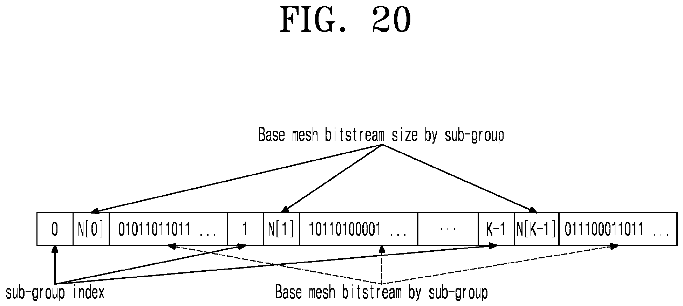

FIG. 20 is a diagram illustrating the first embodiment of the base mesh bitstream generation method. According to embodiments, the base mesh for each sub-group may be compressed by the static mesh encoder (i.e., static base mesh coding tool (Draco, TFan, etc.)) 1114. That is, base mesh bitstreams are generated on a sub-group-by-sub-group basis. Then, the base mesh bitstreams for the respective sub-groups may be concatenated (or multiplexed) into a single base mesh bitstream to be transmitted Here, the multiplexing may be performed by at least one of the static mesh encoder 1114, multiplexer 1123, or transmitter 1130, or by a separate block.

In other words, all base mesh bitstreams for the respective sub-groups may be concatenated into a single bitstream to be transmitted. In this case, sub-group identification information (e.g., sub-group index information, sub-group base mesh bitstream size information) may be signaled before the base mesh bitstream for each sub-group and transmitted together with the bitstream, such that in order for the decoder on the receiving side may distinguish between the sub-groups and decode the base mesh bitstreams on a per sub-group basis.

Referring to FIG. 20, for example, there are K base mesh bitstreams, and each base mesh bitstream is preceded by signaling of sub-group index information (e.g., 0 to K-1) to identify the corresponding sub-group and sub-group base mesh bitstream size information (e.g., N[0] to N{K-1]) to identify the size of the base mesh bitstream of the corresponding sub-group.

The second embodiment is a method in which the base mesh for each sub-group is compressed individually, and each base mesh bitstream is generated and transmitted.

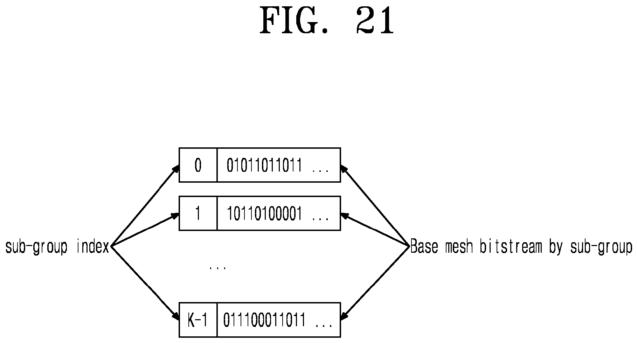

FIG. 21 is a diagram illustrating the second embodiment of the base mesh bitstream generation method. According to the embodiments, the base mesh for each sub-group may be compressed by the static mesh encoder (i.e., static base mesh coding tool (Draco, TFan, etc.)). That is, base mesh bitstreams may be generated on a sub-group-by-sub-group basis. Then, the base mesh bitstreams for the sub-groups may be transmitted.

In other words, when base mesh bitstreams for the sub-groups are transmitted, sub-group identification information (e.g., sub-group index information) may be signaled before the base mesh bitstream for each sub-group and transmitted together with the bitstream, such that in order for the decoder on the receiving side may distinguish between the sub-groups and decode the base mesh bitstreams on a per sub-group basis.

Referring to FIG. 21, for example, there are K base mesh bitstreams, and each base mesh bitstream is preceded by signaling of sub-group index information (e.g., 0 to K-1) to identify the corresponding sub-group.

The third embodiment is a method in which the entire base mesh is compressed without distinguishing sub-groups and a base mesh bitstream is generated and transmitted. The compression and bitstream generation for the base mesh according to the third embodiment may be performed by the static mesh encoder (i.e., static base mesh coding tool (Draco, TFan, etc.)) 1114. In the third embodiment, the same base mesh compression method described with reference to FIG. 6, 7, 13, or 30 may be applied. In the third embodiment, the entire base mesh may be compressed by the static mesh encoder 1114, without considering base meshes generated on a per sub-group, but additional information for accessing the components of the base mesh for a specified sub-group during reconstruction may be signaled to and transmitted in the signaling information.

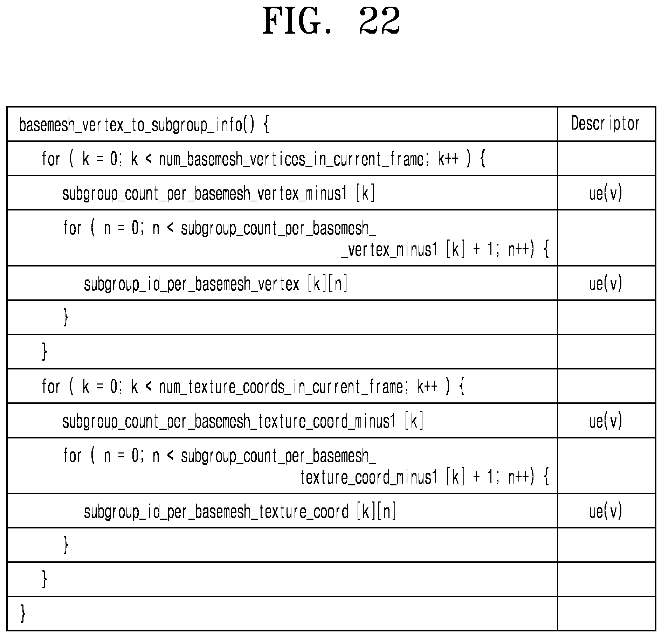

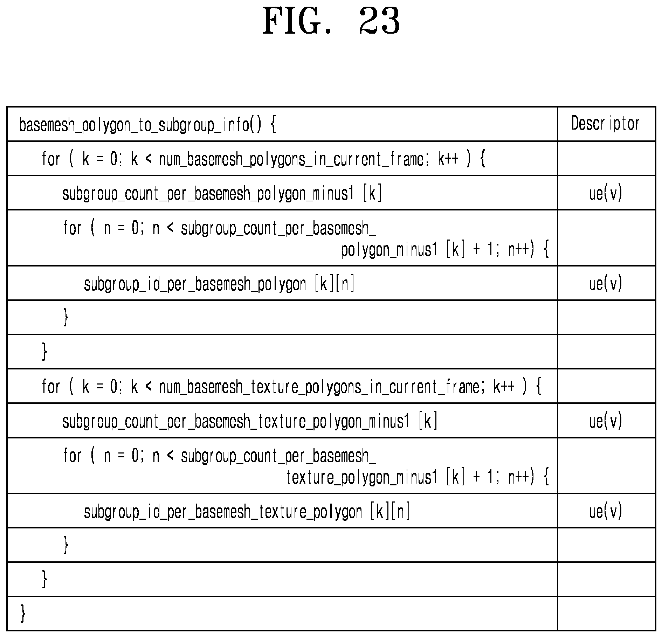

That is, for all vertices or polygons of the base mesh decoded after compression, the encoder of the transmission apparatus may signal the sub-group index to which each vertex or polygon belongs, as shown in FIGS. 22 and 23. Then, the decoder of the reception apparatus may reconstruct the entire base mesh from the base mesh bitstream, and may access, and then, based on the vertex or polygon index information that belongs to a sub-group index specified by the user, access corresponding vertex or polygon and use the same for partial reconstruction.

FIG. 22 illustrates an example syntax structure of sub-group index information for each base mesh vertex/texture coordinate (basemesh_vertex_to_subgroup_info()) according to embodiments.

The sub-group index information for each base mesh vertex/texture coordinate (basemesh_vertex_to_subgroup_info()) in FIG. 22 may include a first loop that iterates as many times as the value of the num_basemesh_vertices_in_current_frame field.

The num_basemesh_vertices_in_current_frame field indicates the number of vertices constituting the base mesh in the current frame.

The first loop includes a subgroup_count_per_basemesh_vertex_minus1[k] field. The value of subgroup_count_per_basemesh_vertex_minus1[k] plus 1 may indicate the number of subgroups to which the k-th vertex constituting the base mesh in the current frame belongs.

According to the embodiments, the sub-group index information for each base mesh vertex/texture coordinate may include a second loop that iterates as many times as the value of subgroup_count_per_basemesh_vertex_minus1[k]. The second loop may include a sub-group _id_per_basemesh_vertex[k][n] field. The subgroup _id_per_basemesh_vertex[k][n] field indicates the index of the n-th sub-group to which the k-th vertex constituting the base mesh in the current frame belongs.

According to embodiments, the sub-group index information for each base mesh vertex/texture coordinate may further include a third loop that iterates as many times as the value of the num_texture_coords_in_current_frame field.

The num_texture_coords_in_current_frame field indicates the number of texture coordinates constituting the base mesh in the current frame.

The third loop includes a subgroup_count_per_basemesh_texture_coord_minus1[k] field. The value of subgroup_count_per_basemesh_texture_coord_minus1[k] plus 1 may indicate the number of sub-groups to which the k-th texture coordinate constituting the base mesh in the current frame belongs.

According to embodiments the sub-group index information for each base mesh vertex/texture coordinate may include a fourth loop that iterates as many times as the value of the sub-group_count_per_basemesh_texture_coord_minus1[k] field. The fourth loop may include a subgroup_id_per_basemesh_texture_coord [k][n] field. The subgroup_id_per_basemesh_texture_coord [k][n] field indicates the index of the n-th sub-group to which the k-th texture coordinate constituting the base mesh in the current frame belongs.

FIG. 23 illustrates an example syntax structure of sub-group index information for each base mesh polygon/texture polygon (basemesh_polygon_to_subgroup_info()) according to embodiments.

The sub-group index information for each base mesh polygon/texture polygon (basemesh_polygon_to_subgroup_info()) in FIG. 23 may include a first loop that iterates as many times as the value of a num_basemesh_polygons_in_current_frame field.

The num_basemesh_polygons_in_current_frame field indicates the number of polygons constituting the base mesh in the current frame.

The first loop includes a subgroup_count_per_basemesh_polygon_minus1 [k] field. The value of subgroup_count_per_basemesh_polygon_minus1 [k] plus 1 may indicate the number of sub-groups to which the k-th polygon constituting the base mesh in the current frame belongs.

According to embodiments, the sub-group index information for each base mesh polygon/texture polygon may include a second loop that iterates as many times as the value of the subgroup_count_per_basemesh_polygon_minus1 [k] field. The second loop may include a subgroup_id_per_basemesh_polygon[k][n] field. The subgroup_id_per_ basemesh_polygon[k][n] field indicates the index of the n-th sub-group to which the k-th polygon constituting the base mesh in the current frame belongs.

According to embodiments, the sub-group index information for each base mesh polygon/texture polygon may further include a third loop that iterates as many times as the value of a num_basemesh_texture_polygons_in_current_frame field.

The num_basemesh_texture_polygons _in_current_frame field indicates the number of texture polygons constituting the base mesh in the current frame.

The third loop may include a subgroup_count_per_basemesh_texture_polygon_minus1 [k] field. The value of subgroup_count_per_basemesh_texture_polygon_minus1 [k] plus 1 may indicate the number of sub-groups to which the k-th texture polygon constituting the base mesh in the current frame belongs.

According to embodiments, the sub-group index information for each base mesh polygon/texture polygon may include a fourth loop that iterates as many times as the value of the subgroup_count_per_basemesh_texture_polygon_minus1 [k] field. The fourth loop may include a subgroup _id_per_basemesh _texture_polygon [k][n] field. The subgroup_id_per_basemesh_texture_polygon [k][n] field indicates the index of the n-th sub-group to which the k-th texture polygon constituting the base mesh in the current frame belongs.

That is, the static mesh encoder 1114 of the present disclosure may apply at least one of the first to third embodiments to compress the base mesh and generate base mesh bitstreams for the respective sub-groups or one base mesh bitstream.

According to embodiments of the present disclosure, inter encoding or intra encoding may be performed. In one embodiment, the intra encoding may be performed by the static mesh encoder 1114, and the inter encoding may be performed by the motion vector encoder 1113. In the intra encoding, the data to be compressed may include the base mesh, displacement, and attribute map. That is, the vertex position information, mapping information (texture coordinates), vertex connectivity information, and the like related to the base mesh may be the compression targets. In the inter encoding, the data to be compressed may include displacement, attribute maps, and the motion field (motion vector) between the reference base mesh and the current base mesh. Here, the motion field refers to the difference in vertex between the reference base mesh and the current base mesh, and is used interchangeably with the motion vector. In the present disclosure, the value of the motion field may be encoded. Alternatively, a predicted motion field may be calculated by averaging the motion fields of the reconstructed vertices among the vertices connected to the current vertex, and a residual motion field, which is the difference between the value of the predicted motion field and the value of the motion field of the current vertex, may be encoded.

In the present disclosure, intra encoding or inter encoding may be performed on a per sub-group basis.

In the present disclosure, information (e.g., subgroup_basemesh_coding_type) for identifying the encoding method applied to each sub-group may be signaled and transmitted in signaling information (e.g., sub-group_basemesh_coding_info()). In the present disclosure, the information (e.g., subgroup_basemesh_coding_type) for identifying the encoding method applied to each sub-group may be referred to as subgroup base mesh coding type information. Also, the signaling information (e.g., subgroup_basemesh_coding_info()) may be referred to as subgroup base mesh coding information.

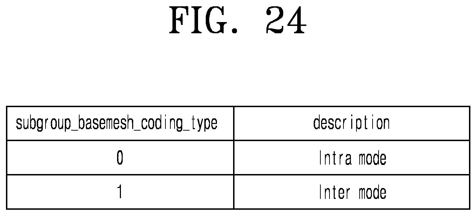

FIG. 24 illustrates an example of type information (e.g., subgroup_basemesh_coding_type) for identifying a sub-group encoding method according to embodiments.

In FIG. 24, subgroup_basemesh_coding_type set to 0 indicates intra mode, while subgroup_basemesh_coding_type set to 1 may indicate inter mode. That is, in the present disclosure, the base mesh coding type may be indicated for each sub-group using subgroup_basemesh_coding_type.

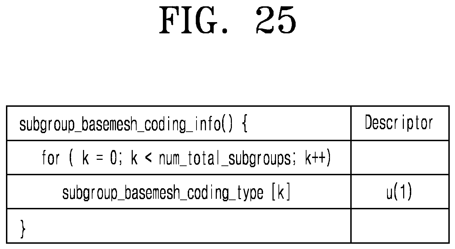

FIG. 25 illustrates an example syntax structure of sub-group base mesh coding information (subgroup_basemesh_coding _info()) according to embodiments.

That is, the sub-group base mesh coding information (subgroup_basemesh_coding_info()) in FIG. 25 may include a loop that iterates as many times as the value of the num_total_subgroups field. The loop may include a subgroup_basemesh_coding_type [k] field.

The num_total_subgroups field indicates the number of sub-groups. According to embodiments, the num_total_subgroups field may be included in the signaling information (e.g., mesh_subgroup_info_set()) of FIG. 17 as one embodiment.

The subgroup_basemesh_coding_type [k] field indicates the coding type for the k-th sub-group. For example, subgroup_basemesh_coding_type [k] set to 0 may indicate that the intra mode is applied to the k-th sub-group. subgroup_basemesh_coding_type [k] set to 1 indicate that the inter mode is applied to the k-th sub-group.

As such, in the present disclosure, the base mesh coding type for each sub-group may be defined as shown in FIG. 24, and the base mesh coding type for each sub-group may be signaled as in FIG. 25. When at least one of the first to third embodiments described above is applied to generate a base mesh bitstream, subgroup_basemesh_coding_type is set to intra mode and signaled in the sub-group base mesh coding information (subgroup_basemesh_coding_info()).

The signaling information (e.g., mesh_subgroup_info_set()) of FIG. 17 and/or the signaling information (subgroup_basemesh_coding_info()) of FIG. 25 may be transmitted together as header information, or may be transmitted together with the base mesh bitstream for each sub-group. Alternatively, they may be transmitted as header information before transmitting all base mesh bitstreams.

### f) Sub-group-based motion field generation and encoding method

Next, a method of generating and encoding a motion field (also referred to as a motion vector) based on sub-groups is described below.

As described above, for specific sub-groups, inter mode may be applied for compression. In other words, when inter encoding (also referred to as inter-frame encoding) is allowed, inter encoding may be performed for each sub-group. In other words, under the same conditions as V-DMC, when the number of vertices, connectivity information, the number of texture coordinates, and connectivity information related to the base mesh are all identical for the same sub-group from consecutive frames, inter coding may be performed on the base mesh components of the sub-group, and a base mesh motion field may be obtained based on the sub-group.

In the present disclosure, the motion field components generated for each sub-group may be encoded as described above. For example, the value of the motion field may be encoded. Alternatively, a predicted motion field may be calculated by averaging the motion fields of the reconstructed vertices among the vertices connected to the current vertex, and a residual motion field, which is the difference between the value of the predicted motion field and the value of the motion field of the current vertex, may be encoded. For example, the motion vector encoder 1113 may receive, on a per sub-group basis, the base mesh and the reference reconstructed base mesh (or the reconstructed quantized reference base mesh) as input, calculate the motion field (or motion vector) between the two meshes, and encode the value. Alternatively, the motion vector encoder 1113 may use a previously encoded/decoded motion field as aa predictor on a per sub-group basis to perform prediction based on connectivity information, and encode the residual motion field obtained by subtracting the predicted motion field from the current motion field.

Through the inter encoding operation, a motion field bitstream (or motion vector bitstream) is generated for each sub-group.

According to embodiments, once the motion field bitstream is generated by applying the inter encoding method described above, subgroup_basemesh_coding_type is set to inter mode and signaled in the sub-group base mesh coding information (subgroup_basemesh_coding_info()). In other words, for sub-groups to which inter encoding is applied, the subgroup_basemesh_coding_type in FIG. 24 may be set to inter mode and signaled in the sub-group base mesh coding information (subgroup_basemesh_coding_info()) in FIG. 25.

At this time, the motion field bitstreams for the respective sub-groups may be concatenated (or multiplexed) into a single motion field bitstream to be transmitted. Here, the multiplexing may be performed by at least one of the motion vector encoder 1113, multiplexer 1123, or transmitter 1130, or by a separate block.

In other words, all motion field bitstreams for the respective sub-groups may be concatenated into a single bitstream to be transmitted. In this case, sub-group identification information (e.g., at least one of sub-group index information, bitstream size information, or coding type information) may be signaled before the motion field bitstream for each sub-group and transmitted together with the bitstream, such that in order for the decoder on the receiving side may distinguish between the sub-groups and decode the motion field bitstreams on a per sub-group basis. Here, the coding type information is base mesh coding type information for each sub-group, and corresponds to subgroup_basemesh_coding_type in FIG. 24. Since the coding type information is already signaled through FIGS. 24 and 25, it may be omitted before the motion field bitstream for each sub-group.

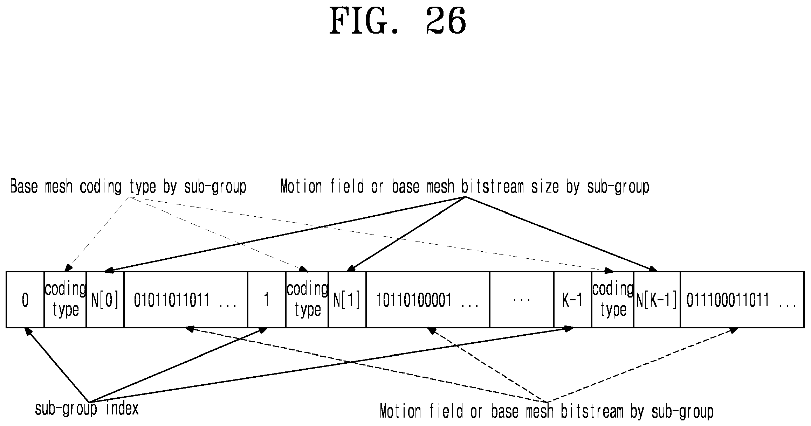

FIG. 26 is a diagram illustrating an example of a sub-group-specific motion field bitstream according to embodiments. In the example of FIG. 26, before the motion field bitstream for each sub-group, sub-group index information (e.g., 0 to K-1), motion field bitstream size information related to the corresponding sub-group (e.g., N[0] to N{K-1]), and coding type information are included.

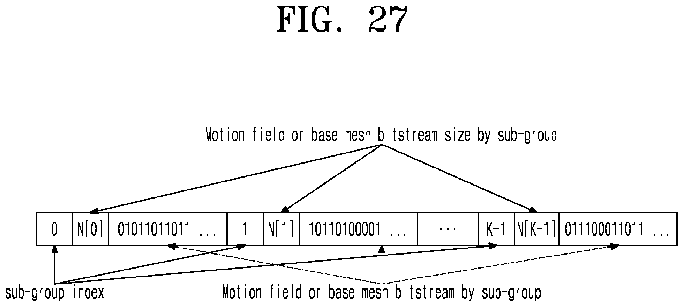

FIG. 27 is a diagram illustrating another example of the sub-group-specific motion field bitstream according to embodiments. In the example of FIG. 27, before the motion field bitstream for each sub-group, sub-group index information (e.g., 0 to K-1) and motion field bitstream size information related to the corresponding sub-group (e.g., N[0] to N{K-1]) are included, but the coding type information is omitted.

As described above, inter encoding or intra encoding may be performed on a sub-group basis.

For example, intra encoding may be performed for sub-group 1 to geneate a base mesh bitstream, while inter encoding may be performed for sub-group 2 to geneate a motion field bitstream. In this case, the subgroup_basemesh_coding_type for sub-group 1 is set to intra mode, and the subgroup_basemesh_coding_type for sub-group 2 is set to inter mode, which are signaled in the sub-group base mesh coding information (subgroup_basemesh_coding_info())

Then, the bitstreams for the respective sub-groups may be concatenated (or multiplexed) into a single bitstream as shown in FIG. 26 or 27. In this case, a bitstream compressed using intra encoding and a bitstream compressed using inter encoding may coexist. As shown in FIGS. 26 and 27, depending on whether the bitstream is a base mesh bitstream or a motion field bitstream, the bitstream size information may indicate the size of the base mesh bitstream or the motion field bitstream. In addition, the coding type information in FIG. 26 may indicate intra mode or inter mode depending on whether the bitstream is a base mesh bitstream or a motion field bitstream.

Thus, when sub-groups to which inter encoding is not applicable are present in the current frame, intra encoding as in FIG. 20 or 21 may be used to generate a base mesh bitstream, and may be combined with the motion field bitstreams of other sub-groups generated by inter encoding into a single bitstream to be transmitted, as shown in FIG. 26 or 27.

Alternatively, the motion field bitstream and the base mesh bitstream may be transmitted separately as independent bitstreams. That is, the motion field bitstream and the base mesh bitstream may be transmitted separately without being combined into a single bitstream. In this case, since both the motion field bitstream and the base mesh bitstream are distinguishable by sub-group index, partial decoding may be performed by the decoder of the reception apparatus.

In the present disclosure, the switching part 1112, motion vector encoder 1113, and static mesh encoder 1114 may be grouped and referred to as a base mesh encoder.

### g) Displacement and attribute map encoding method

Next, a method of encoding displacement and an attribute map is described below.

In the present disclosure, the displacement components (also referred to as a displacement vector) and components of an attribute map (also referred to as a texture map) may be compressed into a video bitstream using the same compression method as described with reference to FIG. 6, 7, or 13.

According to embodiments, although the displacement components are calculated for each sub-group, the process of quantization, transformation, packing into a 2D image, video generation, and the process of compressing the data using a video codec may be performed in the same manner as the compression process described with reference to FIG. 6, 7, or 13.

According to embodiments, for the attribute map, the attribute transfer and video compression may be performed on the input original attribute map images in the same manner as described with reference to FIG. 6, 7, or 13.

Specifically, the base mesh reconstructor 1115 may receive an encoded base mesh from the static mesh encoder 1114 or the encoded motion field from the motion vector encoder 1113 and generate a reconstructed base mesh. For example, the base mesh reconstructor 1115 may reconstruct the base mesh by performing static mesh decoding on the base mesh encoded by the static mesh encoder 1114. In this case, quantization may be applied before the static mesh decoding, and inverse quantization may be applied after the static mesh decoding. In another example, the base mesh reconstructor 1115 may reconstruct the base mesh based on the reconstructed quantized reference base mesh and the motion field encoded by the motion vector encoder 1113. The reconstructed base mesh is output to the displacement vector calculator 1116 and the mesh reconstructor 1120.

In the present disclosure, the displacement vector calculator 1116 may perform mesh subdivision on the reconstructed base mesh. The displacement vector calculator 1116 may calculate the displacement vector (also referred to as a displacement component), which is the difference in vertex position between the subdivided reconstructed base mesh and the fitted subdivided mesh generated by the pre-processor 1111. At this time, as many displacement vectors as the number of vertices in the subdivided mesh may be calculated. The displacement vector calculator 1116 may transform the displacement vectors calculated in the 3D Cartesian coordinate system to a local coordinate system based on the normal vector of each vertex.

In the present disclosure, the displacement vector video generator 1117 may include a linear lifting part, a quantizer, and an image packer. That is, the linear lifting part in the displacement vector video generator 1117 may transform the displacement vectors for efficient encoding. The transformation may be lifting transform, wavelet transform, or the like, depending on the embodiments. The quantizer may quantize the transformed displacement vector values (i.e., transform coefficients). Different quantization parameters may be applied to the respective axes of the transform coefficients. The parameters may be derived by agreement between the encoder and decoder. The transformed and quantized displacement vector information may then be packed into a 2D image by the image packer. The displacement vector video generator 1117 may generate a displacement vector video by grouping the packed 2D images for each frame. The displacement vector video may be generated for each group of frames (GoF) of the input mesh.

In the present disclosure, the displacement vector video encoder 1118 may encode the generated displacement vector video using a video compression codec. The generated displacement vector video bitstream is transmitted to the multiplexer 1123.

The displacement vector reconstructor 1119 may include a video decoder, an image unpacker, an inverse quantizer, and an inverse linear lifting part. That is, the displacement vector reconstructor 1119 decodes the encoded displacement vector using the video decoder, unpacks the image using the image unpacker, performs inverse quantization using the inverse quantizer, and then performs inverse transform using the inverse linear lifting part to reconstruct the displacement vector. The reconstructed displacement vector is output to the mesh reconstructor 1120. The mesh reconstructor 1120 reconstructs the deformed mesh based on the base mesh reconstructed by the base mesh reconstructor 1115 and the displacement vector reconstructed by the displacement vector reconstructor 1119. The reconstructed mesh (also referred to as the reconstructed deformed mesh) has the reconstructed vertices, vertex connectivity information, texture coordinates, texture coordinate connectivity information, and the like.

In the present disclosure, the texture map video generator 1121 may regenerate the texture map based on the texture map (or attribute map) of the original mesh and the reconstructed deformed mesh output from the mesh reconstructor 1120. According to embodiments, the texture map video generator 1121 may assign the vertex-specific color information in the texture map of the original mesh to the texture coordinates of the reconstructed deformed mesh.

The texture map video generated by the texture map video generator 1121 may be encoded using the video compression codec of the texture map video encoder 1122. The encoded texture map video bitstream is transmitted to the multiplexer 1123.

In the present disclosure, for the displacement component, it is necessary to extract only the displacement information about the vertices belonging to the target sub-group from the reconstructed displacement data about all vertices in the current frame. To this end, according to the present disclosure, the sub-group index information related to all vertices or each polygon may be signaled, allowing the user to select only the displacement information related to a desired sub-group region.

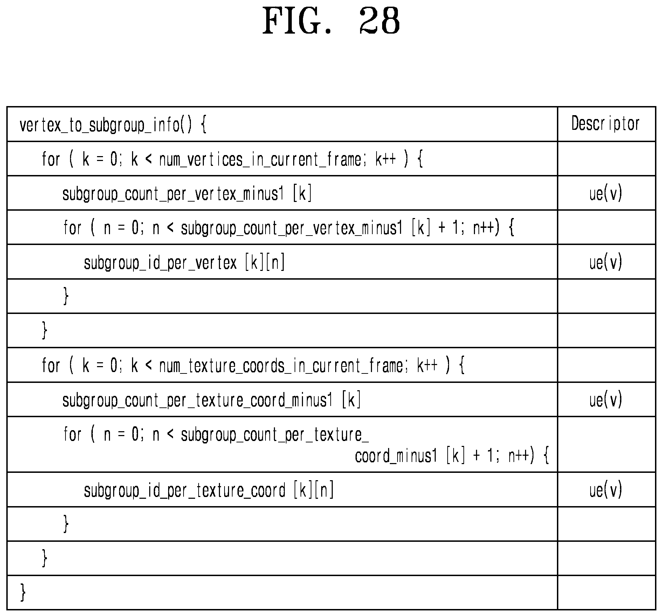

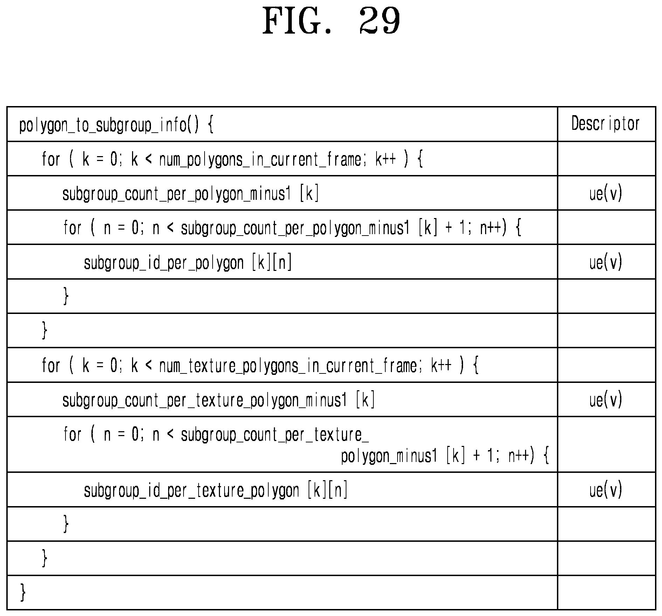

According to embodiments, for all vertices or polygons of the mesh, the encoder of the transmission apparatus may signal the sub-group index to which each vertex or polygon belongs, as shown in FIGS. 28 and 29, and transmit the same to the reception apparatus.

According to embodiments, the decoder of the reception apparatus may retrieve only the necessary information from the reconstructed displacement data based on the indices of the vertices or polygons belonging to the target sub-group. In the case where base mesh encoding has been performed according to the third embodiment of e) the sub-group-based base mesh encoding method described above, the necessary information may be inferred from the signaling information in FIGS. 22 and 23 transmitted in this case. Accordingly, the signaling information in FIGS. 28 and 29 does not need to be transmitted separately. In other words, in the case where base mesh encoding has been performed according to the third embodiment of e) the sub-group-based base mesh encoding method described above, the transmission of the signaling information in FIGS. 28 and 29 may be skipped.

FIG. 28 illustrates an example syntax structure of sub-group index information for each mesh vertex/texture coordinate (vertex_to_subgroup_info()) according to embodiments.

The sub-group index information for each mesh vertex/texture coordinate (vertex_to_subgroup_info()) in FIG. 28 may include a first loop that iterates as many times as the value of a num_vertices_in_current_frame field.

The num_vertices_in_current_frame field indicates the number of vertices in the current frame.

The first loop may include a subgroup_count_per_vertex_minus1[k] field. The value of subgroup_count_per_vertex_minus1 [k] plus 1 may indicate the number of sub-groups to which the k-th vertex in the current frame belongs.

According to embodiments, the sub-group index information for each mesh vertex/texture coordinate may include a second loop that iterates as many times as the value of the subgroup_count_per_vertex_minus1[k] field. The second loop may include a subgroup_id_per_vertex[k] [n] field. The subgroup_id_per_vertex[k][n] field indicates the index of the n-th subgroup to which the k-th vertex in the current frame belongs.

According to embodiments, the sub-group index information for each mesh vertex/texture coordinate may further include a third loop that iterates as many times as the value of the num_texture_coords_in_current_frame field.

The num_texture_coords_in_current_frame field indicates the number of texture coordinates in the current frame.

The third loop includes a subgroup_count_per_texture_coord_minus1[k] field. The value of subgroup_count_per_texture_coord_minus1[k] plus 1 may indicate the number of sub-groups to which the k-th texture coordinate in the current frame belongs.

According to embodiments, the sub-group index information for each mesh vertex/texture coordinate may include a fourth loop that iterates as many times as the value of the subgroup_count_per_texture_coord_minus1[k] field. The fourth loop may include a subgroup_id_per_texture_coord[k][n] field. The subgroup_id_per_texture_coord[k][n] field indicates the index of the n-th subgroup to which the k-th texture coordinate in the current frame belongs.

FIG. 29 illustrates an example syntax structure of sub-group index information for each mesh polygon/texture polygon (polygon_to_subgroup_info()) according to embodiments.

The sub-group index information for each mesh polygon/texture polygon (polygon_to_subgroup_info()) in FIG. 29 may include a first loop that iterates as many times as the value of the num_polygons_in_current_frame field.

The num_polygons_in_current_frame field indicates the number of polygons in the current frame.

The first loop may include a subgroup_count_per_polygon_minus1[k] field. The value of subgroup_count_per_polygon_minus1[k] plus 1 may indicate the number of sub-groups to which the k-th polygon in the current frame belongs.

According to embodiments, the sub-group index information for each mesh polygon/texture polygon may include a second loop that iterates as many times as the value of the subgroup_count_per_polygon_minus1[k] field. The second loop may include a subgroup_id_per_polygon[k][n] field. The subgroup_id_per_polygon[k][n] field indicates the index of the n-th sub-group to which the k-th polygon in the current frame belongs.

According to embodiments, the sub-group index information for each mesh polygon/texture polygon may further include a third loop that iterates as many times as the value of a num_texture_polygons_in_current_frame field.

The num_texture_polygons_in_current_frame field indicates the number of texture polygons in the current frame.

The third loop may include a subgroup_count_per_texture_polygon_minus1[k] field. The value of subgroup_count_per_texture_polygon_minus1[k] plus 1 may indicate the number of sub-groups to which the k-th texture polygon in the current frame belongs.

According to embodiments, the sub-group index information for each mesh polygon/texture polygon may include a fourth loop that iterates as many times as the value of the subgroup_count_per_texture_polygon_minus1[k] field. The fourth loop may include a subgroup_id_per_texture_polygon[k][n] field. The subgroup_id_per_texture_polygon[k][n] field indicates the index of the n-th sub-group to which the k-th texture polygon in the current frame belongs.

As described above, the transmission apparatus in FIG. 30 is a device configured to perform a) Definition of sub-groups of a mesh and sub-group generation method, b) Subgroup-based atlas parameterization (pre-processing) method, c) Sub-group-based base mesh generation method, d) Sub-group-based fitting subdivision surface method, e) Sub-group-based base mesh encoding method, f) Sub-group-based motion field generation and encoding method, and g) Displacement and attribute map encoding method described above.

In one embodiment, the sub-group-related signaling information illustrated in and described with reference to FIGS. 16, 17, 22, 23, 24, 25, 28, and 29 may be encoded as a sub-group-related auxiliary information bitstream and then transmitted to the reception apparatus via the multiplexer 1123 and transmitter 1130. Also, in one embodiment, some or all of the signaling information illustrated in and described with reference to FIGS. 16, 17, 22, 23, 24, 25, 28, and 29 may be transmitted as header information, or transmitted together with the base mesh bitstream for each sub-group. Alternatively, it may be transmitted as header information before transmitting all base mesh bitstreams.

That is, when sub-groups are generated by the sub-group generator 1110 according to the method specified by the user for the input original mesh, subsequent encoding operations may be performed based thereon. Sub-group-based atlas parameterization may be applied in the pre-processor 1111. Also, the base meshes generated by the sub-group-based base mesh generation method may be compressed by the static mesh encoder 1114 (i.e., the sub-group-based base mesh encoding operation), using one of the encoding methods proposed in the first to third embodiments. Further, when a sub-group base mesh is allowed to be encoded in the inter mode, the sub-group-based motion field generation and encoding method may be performed by the motion vector encoder 1113. The procedure of encoding displacement vectors and texture maps have been described in detail above, and thus a detailed description thereof is omitted. Additionally, according to the present disclosure, auxiliary information as shown in FIGS. 28 and 29 may be signaled for sub-group-based mesh reconstruction at the receiving side.

Up to this point, the encoding the transmission apparatus or the encoder of the transmission apparatus has been described.

Hereinafter, a description will be given of a method of decoding and rendering mesh data on a sub-group basis by the mesh data reception apparatus/method, based on signaling information.

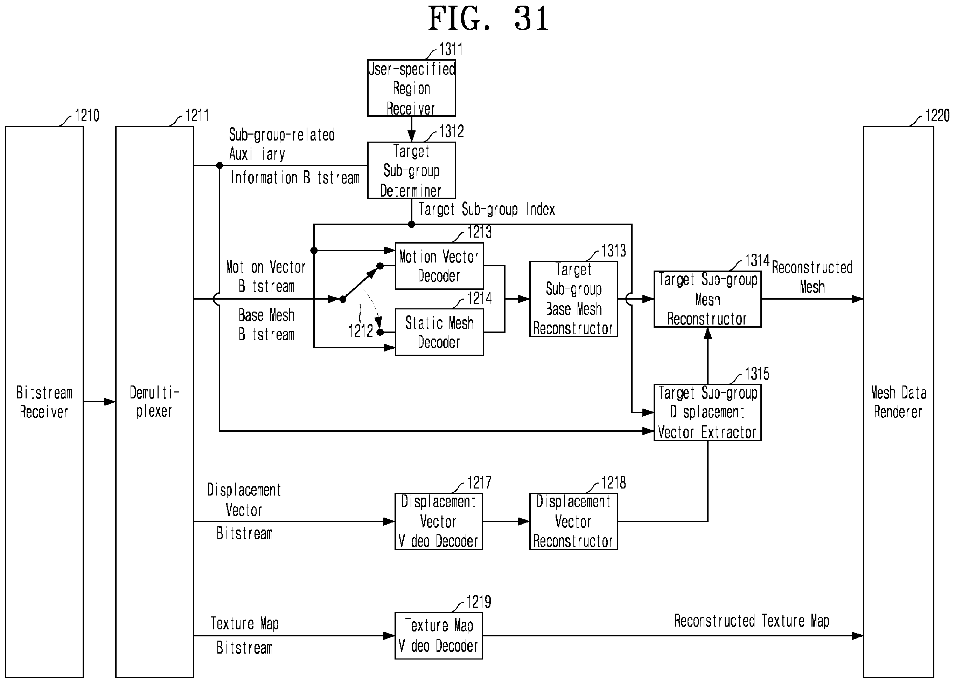

According to embodiments, the mesh data reception apparatus may be one of the reception apparatus 110 in FIG. 1, the reception apparatus in FIG. 11, the reception apparatus in FIG. 12, the reception apparatus in FIG. 14, or the reception apparatus in FIG. 31.

The following describes a method of decoding and rendering mesh data on a sub-group basis by the mesh data reception apparatus/method, based on signaling information.

According to embodiments, the mesh data reception apparatus may be one of the reception apparatus 110 in FIG. 1, the reception apparatus in FIG. 11, the reception apparatus in FIG. 12, the reception apparatus in FIG. 14, or the reception apparatus in FIG. 31.

FIG. 31 is a block diagram illustrating another example of a reception apparatus according to embodiments.

The reception apparatus in FIG. 31 is a device configured to select a target sub-group and decode the mesh data about the selected target sub-group. FIG. 31 corresponds to the reception apparatus 110 in FIG. 1, the reception apparatus in FIG. 11, 12, or 14, and/or a reception apparatus corresponding thereto.

Specifically, the reception apparatus in FIG. 31 is an example configured by adding the user-specified region receiver 1311, target sub-group determiner 1312, target sub-group displacement vector extractor 1315, and sub-group-related auxiliary information bitstream to the reception apparatus in FIG. 14 and modifying the target sub-group base mesh reconstructor 1313 and the target sub-group base mesh reconstructor 1314. Therefore, for parts not described in relation to FIG. 31, refer to the description of the reception apparatus in FIG. 11. The execution order of the blocks in the reception apparatus of FIG. 31 may be changed, some blocks may be omitted, and some blocks may be newly added. Each component in FIG. 31 may correspond to hardware, software, a processor, and/or a combination thereof.

In one embodiment, the sub-group-related signaling information illustrated in and described with reference to FIGS. 16, 17, 22, 23, 24, 25, 28, and 29 may be encoded as a sub-group-related auxiliary information bitstream and then received by the receiver 1210 of the reception apparatus. The sub-group-related signaling information included in the sub-group-related auxiliary information bitstream received by the receiver 1210 is demultiplexed by the demultiplexer 1211 and provided to the target sub-group determiner 1312 and the target sub-group displacement vector extractor 1315. Also, in one embodiment, some or all of the sub-group-related signaling information illustrated in and described with reference to FIGS. 16, 17, 22, 23, 24, 25, 28, and 29 may be received as header information, or received together with the base mesh bitstream for each sub-group. Alternatively, it may be received as header information before all base mesh bitstreams are received.

### h) Target sub-group determination method

Next, a method of determining a target sub-group is described below.

The user-specified region receiver 1311 of the present disclosure may receive a specified desired partial region within a desired mesh through a device, application, or software that uses and displays mesh content. The specified region is referred to herein as a target region.

Based on the 3D location of the specified target region, the target sub-group determiner 1312 of the present disclosure determines a corresponding target sub-group. The target sub-group or target sub-group information determined by the target sub-group determiner 1312 is provided to the motion vector decoder 1213, static mesh decoder 1214, and target sub-group displacement vector extractor 1315.

According to embodiments, the target sub-group determiner 1312 may infer the sub-group determination method, the number of sub-groups, and the region information for each sub-group based on the sub-group related information (e.g., mesh_sub-group_info_set()) such as that shown in FIG. 17, transmitted from the encoder. Then, based on the inferred region information, the index of the target sub-group that includes the target region may be determined. It may include one or more sub-group indices. For details of the information included in the sub-group related information (also referred to as sub-group information) of FIG. 17, refer to the description of FIG. 17. Further description thereof is omitted to avoid redundancy. The target sub-group index determined by the target sub-group determiner 1312 is provided to the motion vector decoder 1213, static mesh decoder 1214, and target sub-group displacement vector extractor 1315.

According to embodiments, the target sub-group may be updated by decoding the input sub-group related information for each sequence, at fixed frame intervals, or for each frame. The mesh region for the determined target sub-group is then reconstructed through subsequent decoding operations.

### i) Decoding method for base mesh of target sub-group

Next, a method of decoding the base mesh of the target sub-group by the static mesh decoder 1214 is described.

According to embodiments, the decoder may recognize the coding type of the target sub-group through the subgroup_basemesh_coding_type field included in the sub-group base mesh coding information (subgroup_basemesh_coding _info()) of FIG. 25, and the switching part 1212 may be controlled according to the coding type to perform base mesh decoding or motion field decoding as described below. For example, when the value of the subgroup_basemesh_coding_type field indicates intra mode, the static mesh decoder 1214 may perform base mesh decoding for the target sub-group to reconstruct the base mesh. When the value indicates inter mode, the motion vector decoder 1213 may perform motion field decoding for the target sub-group to reconstruct the motion field.

j) Method used when the base mesh coding type (subgroup_basemesh_coding_type) for the target sub-group is intra mode

Next, a description will be given of a method of performing base mesh decoding by the static mesh decoder 1214 by applying at least one of the first to third embodiments disclosed below, when the base mesh coding type (subgroup_basemesh_coding_type) for the target sub-group is intra mode.

The decoding methods of the first to third embodiments below correspond to the reverse process of e) Sub-group-based base mesh encoding method described regarding the encoder of the transmission apparatus. In e) Sub-group-based base mesh encoding method, at least one of the first embodiment (see FIG. 20), the second embodiment (see FIG. 21), or the third embodiment is applied to encode the base mesh on a per sub-group basis.

The first embodiment performed by the decoder of the present disclosure is a case where, as shown in FIG. 20, the base mesh bitstreams for each sub-group are concatenated and transmitted as a single bitstream from the transmission apparatus and input to the decoder of the reception apparatus.

That is, the first embodiment is a method of reconstructing the received bitstream by the decoder when the base mesh for each sub-group is compressed and transmitted by the encoder of the transmission apparatus based on the first embodiment of e) Sub-group-based base mesh encoding method. In this case, the base mesh bitstream area corresponding to the target sub-group may be extracted using the sub-group identification information (e.g., sub-group index information and sub-group base mesh bitstream size information) signaled before the bitstream of each sub-group among the input bitstreams. The extracted target base mesh bitstream may then be decoded and reconstructed by the static mesh decoder 1214, using the static base mesh coding tool (Draco, TFan, etc.) used during encoding.

The second embodiment performed by the decoder of the present disclosure is a case where, as shown in FIG. 21, the base mesh bitstreams for each sub-group are individually transmitted and individually input to the decoder of the reception apparatus.

That is, the second embodiment is a method of reconstructing the received bitstream by the decoder when the base mesh for each sub-group is compressed and transmitted by the encoder of the transmission apparatus based on the second embodiment of e) Sub-group-based base mesh encoding method. In this case, the base mesh bitstream corresponding to the target sub-group may be selected using the sub-group identification information (e.g., sub-group index information) signaled before the input individual bitstreams. The selected target base mesh bitstream may be decoded by the static mesh decoder 1214, using the static base mesh coding tool (Draco, TFan, etc.) used by the encoder.

The third embodiment performed by the decoder of the present disclosure is a case where the encoder of the transmission apparatus transmits a compressed bitstream for the entire base mesh without sub-group distinction, and this bitstream is input to the decoder of the reception apparatus.

That is, the third embodiment describes a method of reconstructing a received bitstream by a decoder in a case where the base mesh for each sub-group has been compressed and transmitted by the encoder of the transmission apparatus based on the third embodiment of e) Sub-group-based base mesh encoding method. In this case, the entire base mesh may be reconstructed by the static mesh decoder 1214 in the same manner as the decoding method described in FIG. 1, 11, 12, 14, or 31, by decoding the bitstream using a static base mesh coding tool. Then, the sub-group base mesh reconstructor 1313 may extract the components of the base mesh corresponding to a target sub-group index and reconstruct the base mesh of the target sub-group, based on sub-group index information for each vertex or polygon signaled and received in the sub-group index information for each base mesh vertex/texture coordinate (basemesh_vertex_to_subgroup_info()) in FIG. 22 and/or the sub-group index information for each base mesh polygon/texture polygon (basemesh_polygon_to_subgroup_info()) in FIG. 23.

### k) Method used when the base mesh coding type (subgroup_basemesh_coding_type) of the target sub-group is inter mode

Next, a description will be given of a method of performing motion field decoding by the motion field decoder 1213 when the base mesh coding type (subgroup_basemesh_coding_type) of the target sub-group is inter mode.

When the base mesh coding type (subgroup_basemesh_coding_type) is inter mode, a bitstream in the form of FIG. 26 or 27 is transmitted and is received by the reception apparatus. That is, instead of the base mesh, a motion field bitstream is transmitted from the transmitter, as inter mode is applied to the base meshes for each sub-group. Then, the decoder of the reception apparatus extracts the sub-group identification information (e.g., target sub-group index and coding type (if signaled), and bitstream size information) signaled before the bitstream of each sub-group, and based on the extracted sub-group identification information, extracts and decodes the motion field bitstream of the corresponding size. In one embodiment, the motion vector decoder 1213 may decode the motion field bitstream. The sub-group base mesh reconstructor 1313 may then restore the target sub-group base mesh in the current frame by adding the reconstructed motion field information related to the target sub-group to the base mesh of the same sub-group index reconstructed from the previous frame.

### 1) Method for displacement decoding and extraction of displacement information related to the target sub-group

Next, a description will be given of a method of decoding displacement information by the decoder and a method of extracting the displacement information related to a target sub-group.

In the present disclosure, displacement components are compressed into a video bitstream using the same compression method as described with reference to FIG. 6, 7, 13, or 30. The displacement information related to the entire mesh may be transmitted without sub-group distinction. Therefore, as described with reference to FIGS. 11, 12, 14, or 31, all displacement components may be restored using a video codec, and only the information corresponding to the target sub-group may be selectively extracted based on the restored components.

According to embodiments, the displacement vector video decoder 1217 may decode the displacement vector bitstream as a video bitstream using a video codec.

According to embodiments, the displacement vector reconstructor 1218 may extract displacement vector transform coefficients from the decoded displacement vector video, and restore the displacement vectors by applying inverse quantization and inverse transform to the extracted coefficients. To this end, the displacement vector reconstructor 1218 may include an image unpacker, an inverse quantizer, and an inverse linear lifting part. If the reconstructed displacement vector is in a local coordinate system, it may be inversely transformed to the Cartesian coordinate system.

In order to allow selection of only the displacement information related to the user-desired sub-group region from the reconstructed results, the decoder of the present disclosure uses the sub-group index information for each vertex/texture coordinate (vertex_to_subgroup_info()) in FIG. 28 and/or the sub-group index information for each mesh polygon/texture polygon (polygon_to_subgroup_info()) in FIG. 29 transmitted from the transmission apparatus. According to embodiments, vertices corresponding to the target sub-group may be extracted based on the sub-group index information for each vertex or polygon, and the displacement information corresponding to the target sub-group may be extracted based on the indices of the extracted vertices.

According to embodiments, instead of the sub-group index information for each vertex/texture coordinate (vertex_to_subgroup_info()) in FIG. 28 and/or the sub-group index information for each mesh polygon/texture polygon (polygon_to_subgroup_info()) in FIG. 29, the sub-group index information for each base mesh vertex/texture coordinate (basemesh_vertex_to_subgroup_info()) in FIG. 22 and sub-group index information for each base mesh polygon/texture polygon (basemesh_ polygon to subgroup info()) in FIG. 23 may be transmitted from the transmission apparatus. In this case, the sub-group indices of subdivided vertices generated through subdivision of the base mesh may be inferred from the sub-group index information for each base mesh vertex/texture coordinate (basemesh_vertex_to_subgroup_info()) in FIG. 22 and sub-group index information for each base mesh polygon/texture polygon (basemesh_polygon_to_subgroup_info()) in FIG. 23. As a result, the sub-group indices of all vertices or polygons may be identified. Based on the identified indices, the target sub-group displacement vector extractor 1315 may extract the vertices corresponding to the target sub-group, and extract the displacement vectors (or displacement information) corresponding to the target sub-group based on the indices of the extracted vertices.

According to embodiments, the target sub-group mesh reconstructor 1314 may finally restore the mesh information related to the target sub-group based on the displacement information extracted through the above-described process. In other words, the target sub-group mesh reconstructor 1314 may generate the mesh (also referred to as reconstructed deformed mesh) of the finally restored target sub-group by combining the base mesh of the target sub-group reconstructed by the target sub-group base mesh reconstructor 1313 with the displacement vector corresponding to the target sub-group extracted by the target sub-group displacement vector extractor 1315.

### m) Method for decoding of an attribute map and extraction of attribute information related to the target sub-group

Next, a description will be given of a method for attribute map decoding and extraction of attribute information related to a target sub-group. In one embodiment, the attribute map decoding and extraction of attribute information related to the target sub-group are performed by the texture map video decoder 1219.

In the present disclosure, the attribute map components are compressed into a video bitstream in the same manner as the compression method performed in FIG. 1, 6, 7, 13, or 30, and the attribute map information related to the entire mesh is compressed without sub-group distinction. In this case, the texture map video decoder 1219 may decode the texture map bitstream as a video bitstream using a video codec to reconstruct the texture map. The reconstructed texture map may have color information about each vertex contained in the reconstructed mesh, and the color value for each vertex may be obtained from the texture map based on the texture coordinates of each vertex. In other words, the reconstructed attribute map contains attribute information about all vertices, and this information may be accessed used the texture coordinates that the reconstructed mesh has. In the present disclosure, the vertex-specific attribute information corresponding to the target sub-group may also be obtained from the corresponding pixel in the reconstructed attribute map image based on the texture coordinates of the vertex that the reconstructed mesh of the target sub-group has. The attribute information related to the target sub-group extracted in this manner is used to finally restore the mesh color of the target sub-group.

According to embodiments, the mesh reconstructed by the target sub-group mesh reconstructor 1314 and the texture map reconstructed by the texture map video decoder 1219 are rendered by the mesh data renderer 1220 and displayed to the user.

As such, the reception apparatus of FIG. 31 is configured to perform the above-described methods including h) Target sub-group determination method, i) Decoding method for base mesh of target sub-group, j) Base mesh decoding method used when the base mesh coding type for the target sub-group is intra mode, k) Motion field decoding method used when the base mesh coding type of the target sub-group is inter mode, 1) Method for displacement decoding and extraction of displacement information related to the target sub-group, and m) Method for decoding of an attribute map and extraction of attribute information related to the target sub-group.

That is, based on the received sub-group-related auxiliary information bitstream and the target region information received via the user-specified region receiver 1311, the target sub-group is determined by the sub-group determiner 1312. Then, to reconstruct a partial region of the mesh for the determined target sub-group, the respective bitstreams are decoded. The bitstream region corresponding to the target sub-group index is extracted from the base mesh bitstream or the motion vector bitstream, and decoding is performed on the extracted bitstream region based on the sub-group-related signaling information included in the sub-group-related auxiliary information bitstream. As a result, the base mesh of the target sub-group is reconstructed. In addition, when all displacement components (or displacement vector) are reconstructed from the displacement vector bitstream through the displacement vector video decoder 1217 and the displacement vector reconstructor 1218, only the information corresponding to the target sub-group is extracted from the reconstructed displacement vector by the target sub-group displacement vector extractor 1315. Then, the extracted displacement vector of the target sub-group and the reconstructed base mesh of the target sub-group are combined by the target sub-group mesh reconstructor 1314 to reconstruct the mesh of the target sub-group. Based on the texture coordinates that the reconstructed mesh of the target sub-group has, the mesh color of the target sub-group may be extracted from the texture map reconstructed by the texture map video decoder 1219. Thus, the mesh data renderer 1220 may display and utilize the finally reconstructed mesh of the target partial region.

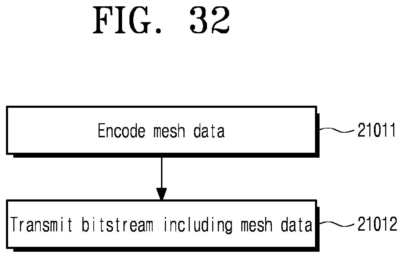

FIG. 32 is a flowchart illustrating an example of a transmission method according to embodiments. The transmission method according to the embodiments may include pre-processing and encoding mesh data (21011) and transmitting a bitstream containing the encoded mesh data (21012).

According to embodiments, operation 21011 of pre-processing and encoding the mesh data may include the above-described methods including a) Method of defining sub-groups of a mesh and generating sub-groups, b) Subgroup-based atlas parameterization method, c) Sub-group-based base mesh generation method, d) Sub-group-based fitting subdivision surface method, e) Sub-group-based base mesh encoding method, f) Sub-group-based motion field generation and encoding method, and g) Displacement and attribute map encoding method.

In other words, in the encoding operation 21011, sub-groups are generated for the input original mesh according to the method specified by the user and atlas parameterization is performed based on the sub-groups. Further, depending on whether the coding type is intra mode or inter mode, the base mesh is encoded based on the sub-groups to generate a base mesh bitstream, or motion vectors (also referred to as motion fields) are encoded to generate a motion vector bitstream. Additionally, a displacement vector is encoded to generate a displacement vector bitstream, and a texture map is encoded to generate a texture map bitstream. The generated bitstreams are then multiplexed and transmitted to the reception apparatus. Sub-group-related signaling information is included in a sub-group-related auxiliary information bitstream to be transmitted. At this time, all or part of the sub-group-related signaling information may be transmitted as header information, or transmitted together with the base mesh bitstream of each sub-group. Alternatively, it may be transmitted as header information before all base mesh bitstreams are transmitted. For more specific and detailed descriptions of the sub-group division method, the sub-group-based encoding, and the sub-group-related signaling information for the same, which will not be provided below to avoid redundancy, refer to the descriptions of FIGS. 15 to 30.

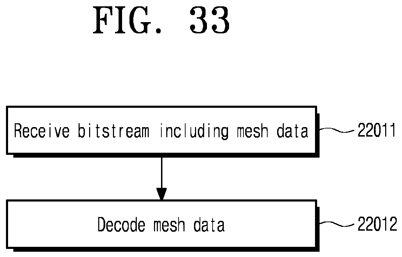

FIG. 33 is a flowchart illustrating an example of a reception method according to embodiments. The reception method according to the embodiments may include receiving a bitstream containing mesh data (22011) and decoding the mesh data contained in the bitstream (22012).

According to the embodiments, operation 22012 of decoding the mesh data includes the above-described methods including h) Target sub-group determination method, i) Decoding method for base mesh of target sub-group, j) Base mesh decoding method used when the base mesh coding type for the target sub-group is intra mode, k) Motion field decoding method used when the base mesh coding type of the target sub-group is inter mode, 1) Method for displacement decoding and extraction of displacement information related to the target sub-group, and m) Method for decoding of an attribute map and extraction of attribute information related to the target sub-group.

That is, in operation 22012 of decoding the mesh data, a target sub-group is determined based on the received sub-group-related signaling information and target region information, base mesh decoding or motion vector decoding is performed based on the determined target sub-group, and a base mesh of the target sub-group is reconstructed based on the decoding. Also, only the information corresponding to the target sub-group is extracted from the reconstructed displacement vector, and is then combined with the reconstructed base mesh of the target sub-group to reconstruct the mesh of the target sub-group. Then, based on the texture coordinates that the reconstructed mesh of the target sub-group has, the mesh color of the target sub-group may be extracted from the reconstructed texture map, and the finally reconstructed mesh of the target partial region is displayed and utilized through the renderer. For more specific and detailed descriptions of operation 22012 of decoding the mesh data, which will not be provided below to avoid redundancy, refer to the detailed descriptions of FIGS. 15 to 31.

In other words, in various usage scenarios, devices, and applications that utilize dynamic meshes, there may be cases where only information about a specific region is needed, even though the entire received dynamic mesh data may be used. Therefore, in such cases, the present disclosure may allow the device or software configured to render the mesh data to receive mesh region information related to a necessary region from the user, decode and display only the region, and may also make the information available for use in other regions. This approach may much more efficient than processing the entire mesh data in terms of processing time and resource related costs compared.

In summary, the present disclosure defines the concept of sub-groups for accessing partial regions and proposes a method of generating sub-groups. Based on the proposal, it proposes atlas parameterization, base mesh coding, and motion field coding methods, and necessary signaling. Thus, independent partial region reconstruction may be performed for the base mesh, the result of the reconstruction may be combined with the reconstruction results of other mesh components to reconstruct the mesh of the user-desired partial region.

Each part, module, or unit described above may be a software, processor, or hardware part that executes successive procedures stored in a memory (or storage unit). Each of the steps described in the above embodiments may be performed by a processor, software, or hardware parts. Each module/block/unit described in the above embodiments may operate as a processor, software, or hardware. In addition, the methods presented by the embodiments may be executed as code. This code may be written on a processor readable storage medium and thus read by a processor provided by an apparatus.

In the specification, when a part "comprises" or "includes" an element, it means that the part further comprises or includes another element unless otherwise mentioned. Also, the term "...module(or unit)" disclosed in the specification means a unit for processing at least one function or operation, and may be implemented by hardware, software or combination of hardware and software.

Although embodiments have been explained with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may fall within the scope of the appended claims and their equivalents.

The apparatuses and methods may not be limited by the configurations and methods of the embodiments described above. The embodiments described above may be configured by being selectively combined with one another entirely or in part to enable various modifications.

Although preferred embodiments of the embodiments have been shown and described, the embodiments are not limited to the specific embodiments described above, and various modifications may be made by one of ordinary skill in the art without departing from the spirit of the embodiments claimed in the claims, and such modifications should not be understood in isolation from the technical ideas or views of the embodiments.

Various elements of the apparatuses of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the apparatus according to the embodiments may include one or more processors capable of executing one or more programs. The one or more programs may perform any one or more of the operations/methods according to the embodiments or include instructions for performing the same. Executable instructions for performing the method/operations of the apparatus according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted to indicate "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in the document, the term "or" should be interpreted to indicate "and/or." For instance, the expression "A or B" may comprise 1) only A, 2) only B, and/or 3) both A and B. In other words, the term "or" in this document should be interpreted to indicate "additionally or alternatively."

Various elements of the embodiments may be implemented by hardware, software, firmware, or a combination thereof. Various elements in the embodiments may be executed by a single chip such as a single hardware circuit. According to embodiments, the element may be selectively executed by separate chips, respectively. According to embodiments, at least one of the elements of the embodiments may be executed in one or more processors including instructions for performing operations according to the embodiments.

Operations according to the embodiments described in this specification may be performed by a transmission/reception apparatus including one or more memories and/or one or more processors according to embodiments. The one or more memories may store programs for processing/controlling the operations according to the embodiments, and the one or more processors may control various operations described in this specification. The one or more processors may be referred to as a controller or the like. In embodiments, operations may be performed by firmware, software, and/or combinations thereof. The firmware, software, and/or combinations thereof may be stored in the processor or the memory.

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise. The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components.

As used herein, conditional expressions such as "if" and "when" are not limited to an optional case and are intended to be interpreted, when a specific condition is satisfied, to perform the related operation or interpret the related definition according to the specific condition. Embodiments may include variations/modifications within the scope of the claims and their equivalents. It will be apparent to those skilled in the art that various modifications and variations may be made in the present disclosure without departing from the spirit and scope of the disclosure. Thus, it is intended that the present disclosure cover the modifications and variations of the present disclosure provided they come within the scope of the appended claims and their equivalents.

### [Mode for Disclosure]

As described above, related contents have been described in the best mode for carrying out the embodiments.

### [Industrial Applicability]

As described above, the embodiments may be fully or partially applied to the 3D data transmission/reception apparatus and system. It will be apparent to those skilled in the art that various changes or modifications may be made to the embodiments within the scope of the embodiments. Thus, it is intended that the embodiments cover modifications and variations provided they come within the scope of the appended claims and their equivalents.

## Claims

1. A method of transmitting 3D data, the method comprising:
pre-processing input mesh data and outputting base mesh data;
encoding the base mesh data; and
transmitting a bitstream containing the encoded mesh data and signaling information.

2. The method of claim 1, further comprising:
dividing the input mesh data into one or more sub-groups.

3. The method of claim 2, wherein the pre-processing comprises:
decimating the input mesh data of the sub-groups and generating decimated mesh data;
generating texture coordinates for each vertex of the decimated mesh data based on the sub-groups and outputting base mesh data having the texture coordinates; and
subdividing the base mesh data having the texture coordinates based on the sub-groups, and generating fitted subdivided mesh data by performing fitting such that the subdivided base mesh data becomes similar to the input mesh data.

4. The method of claim 3, wherein, based on that vertices constituting a polygon among polygons configured by connecting the vertices of the decimated mesh data are included in two or more sub-groups among the sub-groups in the generation of the texture coordinates, connectivity information related to the vertices constituting the polygon are redundantly included in the two or more sub-groups.

5. The method of claim 4, wherein the encoding comprises:
encoding the base mesh data of each of the sub-groups and generating a bitstream for each of the sub-groups, and
inserting sub-group identification information before each of the bitstreams to identify a corresponding one of the sub-groups.

6. The method of claim 5, wherein the encoding further comprises:
reconstructing the encoded base mesh data;
generating displacement information based on the fitted subdivided mesh data and the reconstructed base mesh data;
encoding the displacement information and generating a displacement information bitstream;
reconstructing the encoded displacement information;
reconstructing mesh data based on the reconstructed base mesh data and the reconstructed displacement information;
regenerating a texture map based on a texture map of the input mesh data and the reconstructed mesh data; and
encoding the regenerated texture map and generating a texture map bitstream.

7. The method of claim 6, wherein the signaling information comprises sub-group-related signaling information, wherein the sub-group-related signaling information comprises at least one of:
information for identifying the number of the one or more sub-groups;
information for identifying a method of dividing the sub-groups; or
information for identifying a coding type for the base mesh data.

8. A apparatus for transmitting 3D data, comprising:
a pre-processor configured to pre-process input mesh data and outputting base mesh data;
an encoder configured to encode the base mesh data; and
a transmitter configured to transmit a bitstream containing the encoded mesh data and signaling information.

9. The apparatus of claim 8, further comprising:
a sub-group divider configured to divide the input mesh data into one or more sub-groups.

10. The apparatus of claim 9, wherein the pre-processor comprises:
a mesh decimator configured to decimate the input mesh data of the sub-groups and generate decimated mesh data;
a parameterization part configured to generate texture coordinates for each vertex of the decimated mesh data based on the sub-groups and output base mesh data having the texture coordinates; and
a fitting subdivider configured to subdivide the base mesh data having the texture coordinates based on the sub-groups, and generating fitted subdivided mesh data by performing fitting such that the subdivided base mesh data becomes similar to the input mesh data.

11. The apparatus of claim 10, wherein, based on that vertices constituting a polygon among polygons configured by connecting the vertices of the decimated mesh data are included in two or more sub-groups among the sub-groups in the parameterization part, connectivity information related to the vertices constituting the polygon are redundantly included in the two or more sub-groups.

12. The apparatus of claim 11, wherein the encoder comprises:
a base mesh encoder configured to:
encode the base mesh data of each of the sub-groups and generate a bitstream for each of the sub-groups; and
insert sub-group identification information before each of the bitstreams to identify a corresponding one of the sub-groups;
a base mesh reconstructor configured to reconstruct the encoded base mesh data;
a displacement information generator configured to generate displacement information based on the fitted subdivided mesh data and the reconstructed base mesh data;
a displacement information encoder configured to encode the displacement information and generating a displacement information bitstream;
a displacement information reconstructor configured to reconstruct the encoded displacement information;
a mesh reconstructor configured to reconstruct mesh data based on the reconstructed base mesh data and the reconstructed displacement information;
a texture map generator configured to regenerate a texture map based on a texture map of the input mesh data and the reconstructed mesh data; and
a texture map encoder configured to encode the regenerated texture map and generating a texture map bitstream.

13. The apparatus of claim 12, wherein the signaling information comprises sub-group-related signaling information,
wherein the sub-group-related signaling information comprises at least one of:
information for identifying the number of the one or more sub-groups;
information for identifying a method of dividing the sub-groups; or
information for identifying a coding type for the base mesh data.

14. A method of receiving 3D data, the method comprising:
receiving a bitstream containing encoded mesh data and signaling information;
decoding the encoded mesh data in the bitstream based on the signaling information; and
rendering the decoded mesh data.

15. The method of claim 14, wherein the decoding of the mesh data comprises:
determining a target sub-group based on a user-selected target region and the signaling information; and
extracting a bitstream of the target sub-group from the bitstream, and reconstructing mesh data of the target sub-group by performing decoding based on the extracted bitstream of the target sub-group.
